# EUROPEAN PATENT SPECIFICATION

(11) **EP 4 117 338 B1**
(45) Date of publication and mention of the grant of the patent: **06.05.2026**
(21) Application number: 21780851.8
(22) Date of filing: 22.03.2021
(51) Int. Cl.: H04W 36/00, H04W 4/06, H04W 36/02, H04W 28/02

(54) **DATA TRANSMISSION WITH QFI MAPPING FOR MULTICAST/BROADCAST SERVICE HANDOVER**
DATENÜBERTRAGUNG MIT QFI-ABBILDUNG FÜR MULTICAST/BROADCAST-DIENSTÜBERGABE
TRANSMISSION DE DONNÉES AVEC MAPPAGE QFI POUR TRANSFERT DE SERVICE DE MULTIDIFFUSION/DIFFUSION

(30) Priority: 31.03.2020 CN 202010246676
(43) Date of publication of application: 11.01.2023
(73) Proprietor: Huawei Technologies Co., Ltd., Shenzhen, Guangdong 518129, (CN)
(72) Inventor: JIA, Jianxin, Shenzhen, Guangdong 518129 (CN); WU, Wenfu, Shenzhen, Guangdong 518129 (CN); ZONG, Zaifeng, Shenzhen, Guangdong 518129 (CN)
(74) Representative: Isarpatent
(86) International application number: PCT/CN2021/082179
(87) International publication number: WO 2021/197112

(56) References cited:
- EP-A1- 3 567 919
- WO-A1-2018/130968
- WO-A1-2019/243901
- SAMSUNG: "Group communications with early E-RAB establishment", vol. SA WG2, no. San Francisco, USA; 20131111 - 20131115, 12 November 2013 (2013-11-12), XP050744119, Retrieved from the Internet <URL:http://www.3gpp.org/ftp/Meetings_3GPP_SYNC/SA/SA2/Docs/> [retrieved on 20131112]
- HUAWEI ET AL: "KI#7: Update to Solution#27", vol. SA WG2, no. e-meeting; 20201012 - 20201023, 2 October 2020 (2020-10-02), XP051938505, Retrieved from the Internet <URL:https://ftp.3gpp.org/tsg_sa/WG2_Arch/TSGS2_141e_Electronic/Docs/S2-2007466.zip S2-2007466_Update to Solution 27_v1.2.docx> [retrieved on 20201002]
- ZTE: "KI#7 update the sol#26 to keep align with sol#10", 3GPP DRAFT; S2-2007592, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Electronic, Elbonia; 20201012 - 20201023, 2 October 2020 (2020-10-02), Mobile Competence Centre ; 650, route des Lucioles ; F-06921 Sophia-Antipolis Cedex ; France, XP051938631
- HUAWEI, HISILICON: "KI#7, New Solution: Inter-RAN node MBS Session Handover", 3GPP DRAFT; S2-2003966, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Elbonia; 20200601 - 20200612, 22 May 2020 (2020-05-22), Mobile Competence Centre ; 650, route des Lucioles ; F-06921 Sophia-Antipolis Cedex ; France, XP051889974
- HUAWEI, HISILICON: "Solution to KI1: Establishment of MBS session for multicast", 3GPP DRAFT; S2-1911645, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Reno, NV, USA; 20191118 - 20191122, 8 November 2019 (2019-11-08), Mobile Competence Centre ; 650, route des Lucioles ; F-06921 Sophia-Antipolis Cedex ; France, XP051821724
- "3rd Generation Partnership Project; Technical Specification Group Services and System Aspects; Study on architectural enhancements for 5G multicast-broadcast services (Release 17)", 3GPP STANDARD; TECHNICAL REPORT; 3GPP TR 23.757, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V0.3.0, 29 January 2020 (2020-01-29), Mobile Competence Centre ; 650, route des Lucioles ; F-06921 Sophia-Antipolis Cedex ; France, pages 1 - 37, XP051860857

## Description

### TECHNICAL FIELD

This disclosure relates to the field of communication technologies, and in particular, to a data transmission method and apparatus.

### BACKGROUND

With development of the mobile Internet, mobile high-definition video services are experiencing a surge. Users gradually change from watching hot programs in a conventional manner, such as on fixed televisions, to watching hot programs on mobile phones and the mobile Internet. Therefore, video services have an increasingly strong impact on mobile networks. If transmission of video services can be optimized through air interface multicast, the impact of video traffic on mobile networks will be greatly reduced.

In previous generations of mobile communication technologies, for example, a 3rd generation (the 3rd generation, 3G) mobile communication technology and a 4th generation (the 4th generation, 4G) mobile communication technology, it is difficult to promote a multicast solution. Specifically, in an existing multicast solution, a dedicated network element and interface that support multicast need to be added based on an existing communication architecture, and a dedicated multicast channel is further required for support. This not only increases overheads of operators, but also increases complexity of terminals.

To overcome the foregoing difficulties, supporting a 5th generation (5th generation, 5G) multicast/broadcast function (5G Multicast Broadcast Service, 5MBS) becomes a key research topic.

A key research issue (Key Issue) of the 5MBS research topic is service continuity (Service Continuity). For the research issue, in a scenario in which both an access network device supporting a multicast/broadcast function and an access network device not supporting the multicast/broadcast function exist, how to ensure continuity of a multicast/broadcast service of a terminal device when the terminal device is handed over from a source access network device to a target access network device is an urgent problem to be resolved.
SAMSUNG, "Group communications with early E-RAB establishment", vol. SA WG2, no. San Francisco, USA; 20131111 - 20131115, (20131112), 3GPP DRAFT; S2-134055, 3RD GENERATION PARTNERSHIP PROJECT (3GPP), MOBILE COMPETENCE CENTRE relates to a working document of the 3GPP. It discloses a proposed solution aiming at removing and/or reducing interruption in the service continuity for group communication.
WO 2018/130968 A1 relates to 5G QOS flow to radio bearer remapping.

### SUMMARY

The object of the present invention is to provide a data transmission method and apparatus. In a scenario in which both an access network device supporting a multicast/broadcast function and an access network device not supporting the multicast/broadcast function exist, continuity of a multicast/broadcast service is ensured when a terminal device is handed over from a source access network device to a target access network device. The invention is disclosed in the appended claims.

These or other aspects of this application are more concise and easier to understand in the description of the following embodiments.

### BRIEF DESCRIPTION OF DRAWINGS

FIG. 1 is a schematic diagram of a system architecture to which an embodiment of this application is applicable;
FIG. 2 is a schematic flowchart of data transmission according to an embodiment of this application;
FIG. 3 is another schematic flowchart of data transmission according to an embodiment of this application;
FIG. 4 is a schematic diagram of an application scenario according to this application;
FIG. 5 is a schematic flowchart corresponding to a data transmission method according to an embodiment of this application;
FIG. 6 is a schematic flowchart corresponding to another data transmission method according to an embodiment of this application;
FIG. 7A and FIG. 7B are a schematic flowchart corresponding to another data transmission method according to an embodiment of this application;
FIG. 8 is a schematic flowchart corresponding to a complete data transmission method according to an embodiment of this application;
FIG. 9 to FIG. 13 each are a schematic flowchart corresponding to an end marker construction method according to an embodiment of this application;
FIG. 14 is a schematic diagram of a structure of an apparatus according to this application; and
FIG. 15 is a schematic diagram of a structure of another apparatus according to this application.
In the following description, features which in the above summary of the invention have been marked as "not claimed" are also hereinafter, when they are described and explained with reference to the drawings, to be understood as "not claimed" or "not part of the invention".

### DESCRIPTION OF EMBODIMENTS

To make the objectives, technical solutions, and advantages of this application clearer, the following further describes this application in detail with reference to the accompanying drawings. A specific operation method in method embodiments may also be applied to a device embodiment or a system embodiment.

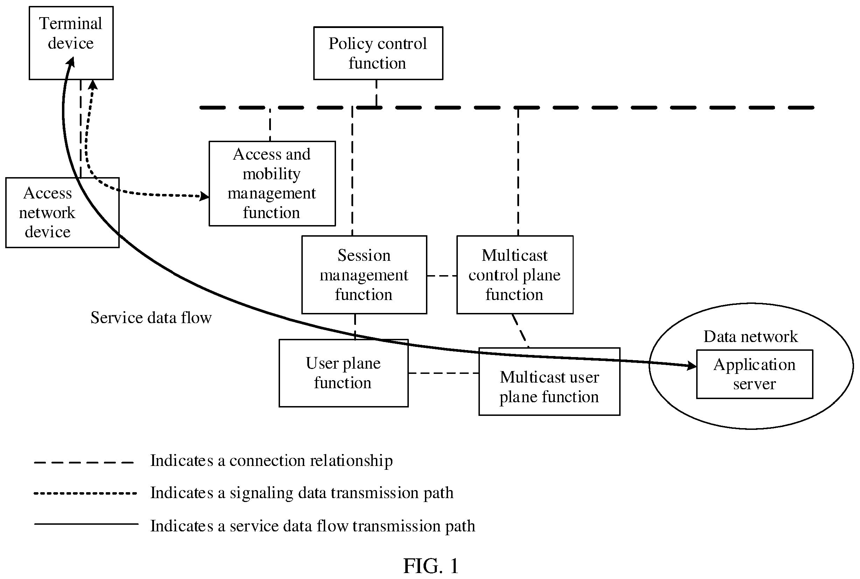

FIG. 1 shows an example of a system architecture to which an embodiment of this application is applicable. As shown in FIG. 1, the system architecture includes a terminal device, an access network device, an access and mobility management function (access and mobility management function, AMF), a session management function (Session Management Function, SMF), a user plane function (user plane function, UPF), a policy control function (policy control function, PCF), and a multicast control plane function (multicast control plane function, MCF), a multicast user plane function (multicast user plane function, MUF), an application function, and a data network (data network, DN).

For example, in the architecture shown in FIG. 1: An N4 interface is a reference point between the SMF and the UPF, and is configured to transmit information such as tunnel identification information of an N3 connection, data buffer indication information, and a downlink data notification message. An N6 interface is a reference point between the UPF and the DN, and is configured to transmit service data and the like. An N7 interface is a reference point between the SMF and the PCF. An N11 interface is a reference point between the AMF and the SMF. Certainly, in future communication, names of these interfaces and network elements may remain unchanged, or may be replaced with other names. This is not limited in this application.

The following separately describes the foregoing devices or network elements.
(1) The terminal device is also referred to as user equipment (user equipment, UE), a terminal (Terminal), a mobile station (mobile station, MS), a mobile terminal (mobile terminal, MT), or the like, and may be a device having a wireless transceiver function. The terminal device may be referred to as a terminal for short. The terminal device may be deployed on land, including an indoor device, an outdoor device, a handheld device, or a vehicle-mounted device; may be deployed on water (for example, on a ship); or may be deployed in the air (for example, on a plane, a balloon, or a satellite). The terminal device may be user equipment (user equipment, UE), and the UE includes a handheld device, a vehicle-mounted device, a wearable device, or a computing device that has a wireless communication function. For example, the UE may be a mobile phone (mobile phone), a tablet computer, or a computer having a wireless transceiver function. The terminal device may alternatively be a virtual reality (virtual reality, VR) terminal device, an augmented reality (augmented reality, AR) terminal device, a wireless terminal in industrial control, a wireless terminal in unmanned driving, a wireless terminal in tele-medicine, a wireless terminal in a smart grid, a wireless terminal in a smart city (smart city), a wireless terminal in a smart home (smart home), and/or the like.
   In embodiments of this application, an apparatus configured to implement a function of the terminal device may be a terminal device, or may be an apparatus, for example, a chip system, that can support the terminal device in implementing the function. The apparatus may be installed in the terminal device. In embodiments of this application, the chip system may include a chip, or may include a chip and another discrete component. In the technical solutions provided in embodiments of this application, the technical solutions provided in embodiments of this application are described by using an example in which the terminal device is the apparatus for implementing the function of the terminal.
(2) The access network device may be a radio access network (radio access network, RAN) node that connects the terminal device to a wireless network. Currently, some RAN nodes are, for example, a next generation NodeB (next generation NodeB, gNB), a transmission reception point (transmission reception point, TRP), an evolved NodeB (evolved Node B, eNB), a radio network controller (radio network controller, RNC), a NodeB (Node B, NB), a base station controller (base station controller, BSC), a base station transceiver station (base transceiver station, BTS), a home base station (for example, home evolved NodeB, home Node B, HNB), a baseband unit (base band unit, BBU), or a wireless fidelity (wireless fidelity, Wi-Fi) access point (access point, AP). The access network device may be in a plurality of forms, for example, a macro access network device, a micro access network device, a relay station, and an access point. The access network device in embodiments of this application may be an access network device in a 5G system, or a future 6th generation (6th generation, 6G) access network device in a future communication system. The access network device in the 5G system may also be referred to as a transmission reception point (transmission reception point, TRP) or a next generation NodeB (generation Node B, gNB or gNodeB).
   In embodiments of this application, an apparatus configured to implement the function of the access network device may be an access network device, or may be an apparatus, for example, a chip system, that can support the access network device in implementing the function. The apparatus may be installed in the access network device. In the technical solutions provided in embodiments of this application, the technical solutions provided in embodiments of this application are described by using an example in which the access network device is the apparatus for implementing the function of the access network device.
(3) The access and mobility management function is mainly configured to perform mobility management, access management, and the like. Specifically, the AMF may be configured to implement a function other than session management in functions of a mobility management entity (mobility management entity, MME), for example, lawful interception or access authorization (or authentication).
(4) The session management function is mainly configured to perform session management, for example, session establishment, modification, and release, Internet Protocol (Internet Protocol, IP) address assignment and management for a terminal device, selection of a manageable user plane function, policy control, or a termination point and downlink data notification of a charging function interface.
(5) The user plane function (user plane function, UPF) is configured to perform packet routing and forwarding, quality of service (quality of service, QoS) processing of user plane data, or the like. The UPF is specifically classified into an intermediate-UPF (intermediate-UPF, I-UPF) and an anchor-UPF (anchor-UPF, A-UPF). The I-UPF may be connected to the access network device, the A-UPF is a UPF of a session anchor, the A-UPF may also be referred to as a PDU session anchor (PDU session anchor, PSA), and the A-UPF may also be connected to the access network device.
(6) The policy control function (policy control function, PCF) is configured to guide a unified policy framework of network behavior, and provides policy rule information for a control plane function network element (such as the AMF network element or the SMF network element).
(7) The application function (application function, AF) is mainly configured to support interaction with a 3rd generation partnership project (3rd generation partnership project, 3GPP) core network to provide services, for example, some third-party application services that affect a data routing decision or a policy control function or that are provided by a network side. The application function may be understood as a third-party server, for example, an application server in the Internet, and provide related service information, including providing quality of service requirement information corresponding to a service to the PCF, and sending user plane data information of the service to a PSA-UPF. The AF may be a content provider (content provider, CP).
(8) The data network (data network, DN) is a network configured to provide transmission data, for example, the Internet.
(9) The multicast user plane function (multicast user plane function, MUF) is mainly configured to transmit data of a multicast service, to be specific, send the data of the multicast service received from the data network to the UPF or the base station.
   Alternatively, the MUF may be another device or unit having the foregoing function, for example, a multicast/broadcast user plane function (Multicast/broadcast-User Plane Function, MB-UPF).
(10) The multicast control plane function (multicast control plane function, MCF) is mainly configured to control a multicast service or a multicast session, for example, extract multicast service related PCC information from the PCF, and obtain multicast service related description information (for example, a description of the multicast service) from an NEF or an MBSF (Multicast/Broadcast Service Function, multicast/broadcast service function). The PCC information may be, for example, a PCC Rule (PCC rule). The MCF may be interconnected with an application server in the data network, for example, interconnected with a content provider (content provider/Service Provider, CP/SP), to receive the multicast service related information (for example, the description of the multicast service).

Alternatively, the MCF may be another device or unit having the foregoing function, for example, a multicast/broadcast session management function (Multicast/broadcast-Session Management Function, MB-SMF).

It should be noted that a network element configured to implement a control plane function of the multicast service may be an independent network element, or may be a module (or an apparatus) supporting implementation of the function. The module may be an entity module or a virtual module, and the module may be integrated into a policy control network element or a session management network element. This is not limited in embodiments of this application.

Similarly, a network element configured to implement a user plane function of the multicast service may be an independent network element, or may be a module (or an apparatus) supporting implementation of the function. The module may be an entity module or a virtual module, and the module may be integrated into a user plane network element. This is not limited in embodiments of this application.

It should be noted that: (1) FIG. 1 is merely an example, and there may be a plurality of UEs, RANs, AMFs, SMFs, UPFs, MUFs, and MCFs (not shown in FIG. 1). In the network elements or devices shown in FIG. 1, all remaining network elements except the UE, the RAN, and the DN are core network elements.
(2) The network element in embodiments of this application may be hardware, software obtained through function division, or a structure obtained by combining the hardware and the software. The network element in embodiments of this application may also be referred to as a function entity. For example, the policy control network element may also be referred to as a policy control function entity. Names of the network elements are not limited in embodiments of this application. A person skilled in the art may change the names of the network elements to other names to perform same functions.
(3) The foregoing schematic system architecture is applicable to communication systems of various radio access technologies, for example, a long term evolution (long term evolution, LTE) communication system, a 5th generation (5th generation, 5G) communication system, and other possible communication systems such as a future communication system, for example, a future 6th generation (6th generation, 6G) system. 5G may also be referred to as new radio (new radio, NR).
   The system architecture and a service scenario described in embodiments of this application are intended to describe the technical solutions in embodiments of this application more clearly, and do not constitute a limitation on the technical solutions provided in embodiments of this application. A person of ordinary skill in the art may know that, with evolution of a communication system architecture and emergence of a new service scenario, the technical solutions provided in embodiments of this application are also applicable to similar technical problems.
(4) Numbers such as "first" and "second" in embodiments of this application are merely used for differentiation for ease of description, and are not used to limit the scope of embodiments of this application or indicate a sequence. The term "and/or" describes an association relationship for describing associated objects and represents that three relationships may exist. For example, A and/or B may represent the following three cases: Only A exists, both A and B exist, and only B exists. "At least one" means one or more. At least two means two or more. "At least one", "any one", or a similar expression means any combination of these items, including a single item (piece) or any combination of a plurality of items (pieces). For example, at least one of a, b, or c may indicate: a, b, c, a and b, a and c, b and c, or a, b, and c, where a, b, and c may be singular or plural, and "plural" means two or more.

It should be noted that the access and mobility management function, the session management function, the user plane function, the multicast user plane function, the multicast control plane function, and the access network device in embodiments of this application may be the AMF, the SMF, the UPF, the MUF, the MCF, and the access network device respectively shown in FIG. 1. Alternatively, the foregoing devices may be network elements or devices that have functions of the AMF, the SMF, the UPF, the MUF, the MCF, and the access network device in a future communication system.

For ease of description, this application is subsequently described by using an example in which the access and mobility management function, the session management function, the user plane function, the multicast user plane function, the multicast control plane function, and the access network device are the AMF, the SMF, the UPF, the MUF, the MCF, and the access network device respectively shown in FIG. 1. Further, the terminal device is referred to as UE, and the access network device is briefly referred to as a RAN or a base station. To be specific, in the following descriptions in this application, all AMFs may be replaced with the access and mobility management function, all SMFs may be replaced with the session management function, and all UPFs may be replaced with the user plane function, all MUFs may be replaced with the multicast user plane function, all MCFs may be replaced with the multicast control plane function, all UEs may be replaced with the terminal device, and all RANs or base stations may be replaced with the access network device.

The following first describes related technical features in embodiments of this application. It should be noted that these explanations are intended to make embodiments of this application easier to understand, but should not be considered as a limitation on the protection scope claimed in this application.

### (1) Unicast

Unicast may be understood as "point-to-point" (point to point, PTP) communication. Unicast specifically has the following several meanings:
At a service layer, data of a unicast service is sent to a single terminal device. At a core network service layer, unicast means sending service data to a terminal device by using a PDU session. In this application document, a unicast sending mode determined by an SMF means sending data of a multicast service to a terminal device by using a PDU session.

For unicast between network elements (or devices), unicast means that there is a unicast tunnel between a source network element and a target network element (that is, an IP address of the target network element is a unicast IP address). For an air interface, an air interface point-to-point manner means that a radio access network sends service data to a single terminal device. This may be understood as that the radio access network sends the service data to the single terminal device by using an air interface radio bearer in unicast mode.

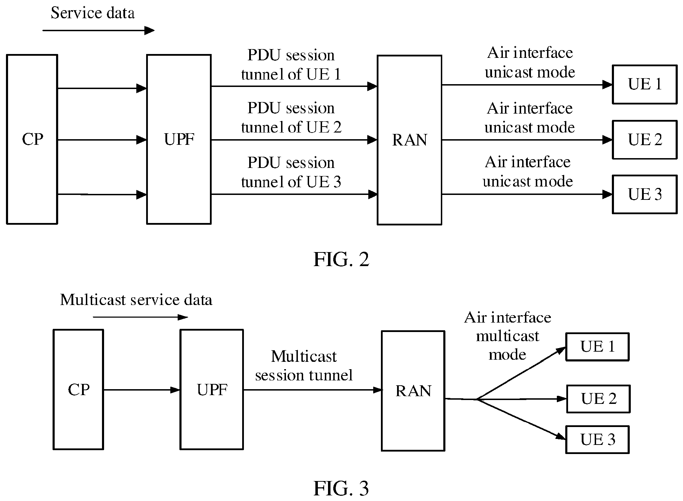

The following uses a PDU session and the system architecture shown in FIG. 1 as an example to provide a unicast data transmission procedure. FIG. 2 is a schematic flowchart of unicast data transmission. The transmission procedure shown in FIG. 2 may be used to transmit both data of a unicast service and data of a multicast service (in unicast mode).

In FIG. 2, three UEs (for example, UE 1, UE 2, and UE 3) correspond to different PDU sessions. Three different pieces of service data sent by a service provider (CP/SP) may be sent to the UEs by using PDU sessions corresponding to the three pieces of service data. Specifically, a service transmission path from the CP/SP to a RAN may include a transmission path between the CP/SP and a UPF and a transmission path between the UPF and the RAN. The transmission path between the UPF and the RAN may be referred to as a PDU session tunnel, and different PDU sessions have different PDU session tunnels. The three PDU session tunnels in this schematic diagram one-to-one correspond to the three UEs. On an air interface, the RAN may send the service data to the UE 1, the UE 2, and the UE 3 in unicast mode, that is, in a PTP manner. In the schematic diagram, the service data of all the UEs may be different (for example, a target address is an IP address of each UE), and the service data of each UE may be separately sent to each UE through an independent transmission path of each UE.

### (2) Multicast

Multicast may be understood as "point-to-multipoint" (point to multi-point, PTM) communication. Multicast specifically has the following several meanings:
At a service layer, data of a multicast service is sent to a plurality of terminal devices. At a core network service layer, multicast means sending data of a multicast service to a terminal device by using a multicast session. The multicast session includes a unicast tunnel or a multicast tunnel between network elements, and a unicast air interface radio bearer or a multicast air interface radio bearer. In embodiments of this application, a multicast sending mode determined by an SMF means sending data of a multicast service to a terminal device by using a multicast session.

For multicast between network elements, multicast means that there is a multicast tunnel between a source network element and a target network element (that is, an IP address of the target network element is a multicast IP address). A multicast session tunnel about a multicast service may be established between an access network device and a core network device. Multicast service data is transmitted in the multicast session tunnel. The multicast service data received by the access network device through the multicast session tunnel may be sent to a plurality of terminal devices that join the multicast service. For an air interface, an air interface multicast mode means that a plurality of terminal devices may receive, at the same time or on a same frequency, one piece of service data sent by a radio access network.

Specifically, multicast session tunnels may be in a one-to-one correspondence with multicast services. One multicast service may include one or more multicast service flows, and a plurality of multicast service flows may correspond to one or more multicast quality of service (quality of service, QoS) flows. That is, the multicast service data in the multicast session tunnel may be transmitted in a form of a multicast QoS flow. This is not limited in embodiments of this application. One multicast session may include one or more multicast QoS flows. In other words, the multicast service may be transmitted in the multicast session tunnel in a form of one or more multicast QoS flows.

The multicast service may be described by using multicast service information. The multicast service information includes at least description information of the multicast service. The description information of the multicast service may include description information of one or more multicast service flows. The description information of the multicast service flow includes at least one of the following: a quality of service identifier (QoS flow identifier, QFI) that the multicast service flow should have, characteristic information of the multicast service flow (such as a destination address, a destination port number, and a source address of the multicast service), or a QoS requirement (such as a jitter, a delay, a packet loss ratio, and a bandwidth) of the multicast service flow. The QoS requirement of the multicast service flow is used to establish a multicast QoS flow. A PDU session tunnel corresponds to UE, and service data in the PDU session tunnel may be transmitted in a form of a unicast QoS flow. In embodiments of this application, the PDU session tunnel may be further used to transmit a unicast QoS flow to which a multicast QoS flow corresponding to a multicast service is mapped. It should be noted that the PDU session is at a UE level, and the multicast session is at a service level. One PDU session of one UE may be associated with a plurality of multicast sessions. In other words, the UE may join at least one multicast service by using the PDU session. A multicast session may provide a service for a multicast service, and the multicast session includes a unicast or multicast tunnel from a data network to a core network device and then to a radio access network, and a unicast or multicast air interface resource allocated by the radio access network to send the multicast service.

In addition to the description information of the multicast service, the multicast service information may further include information about the terminal device, for example, may include an identifier of one or more terminal devices that are allowed (or request) to join the multicast service, an identifier of a terminal device group, and the like.

The system architecture shown in FIG. 1 is used as an example to provide a multicast data transmission procedure. FIG. 3 is a schematic flowchart of multicast data transmission. The transmission procedure shown in FIG. 3 may be used to transmit multicast service data.

In FIG. 3, the multicast service data may be sent from a CP/SP to UE 1, UE 2, and UE 3. A transmission path of a multicast service from the CP/SP to a RAN may include a transmission path between the CP and a UPF and a transmission path between the UPF and the RAN. The transmission path from the UPF to the RAN may be used to transmit the multicast service data through a tunnel, for example, through a general tunnel protocol (general tunnel protocol, GTP)-based tunnel. The transmission path between the UPF and the RAN may be referred to as a multicast session tunnel, and the multicast session tunnel is shared by the UE 1, the UE 2, and the UE 3. On an air interface, the RAN may send the multicast service data to the UE 1, the UE 2, and the UE 3 in PTM mode, that is, only one piece of data needs to be sent, and all the three UEs can receive the data. In the example in FIG. 2, only one piece of multicast service data is sent on a transmission path from the CP to the UE, and a plurality of UEs may simultaneously receive the data.

In multicast mode, service data may be transmitted to all target nodes at a time, or service data may be transmitted only to a specific object. Therefore, in multicast mode, point-to-multipoint transmission may be implemented between one sending node and a plurality of reception nodes. This resolves a problem of low efficiency of a unicast mode.

The foregoing provides the descriptions about unicast and multicast. It may be understood that, that the access network device supports a multicast function may be understood as that the access network device supports multicast transmission of multicast service data, and that the access network device does not support a multicast function may be understood as that the access network device does not support multicast transmission of multicast service data or the access network device supports only unicast transmission of multicast service data or PDU session data. For an access network device that does not support the multicast function, a network service of a terminal device may be implemented by using a PDU session. For an access network device that supports the multicast function, the multicast service data may be received from a core network through the multicast session tunnel, and sent to a plurality of terminal devices that join the multicast service. It should be understood that, after arriving at the RAN, the multicast service data is processed by a service data adaptation protocol (service data adaptation protocol, SDAP) layer, a packet data convergence protocol (packet data convergence protocol, PDCP) layer, a radio link control (radio link control, RLC) layer, a media access control (media access control, MAC) layer, and a physical (physical, PHY) layer of the RAN, and then is sent to each UE that receives the multicast service data.

It should be noted that the multicast session may be further used to send broadcast service data to a terminal device. This is not limited in embodiments of this application. "Multicast" in this application is a concept in a broad sense, and may include multicast (multicast) or broadcast (broadcast). In other words, embodiments of this application may be applied to both multicast service transmission and broadcast service transmission. The multicast control plane network element in embodiments of this application may be further configured to control a broadcast service, and the multicast user plane network element may be further configured to transmit data related to the broadcast service. "Multicast" mentioned in this application may be replaced with "multicast or broadcast". Therefore, various data transmission manners described by using the multicast service as an example in embodiments of this application may also be applied to the broadcast service.

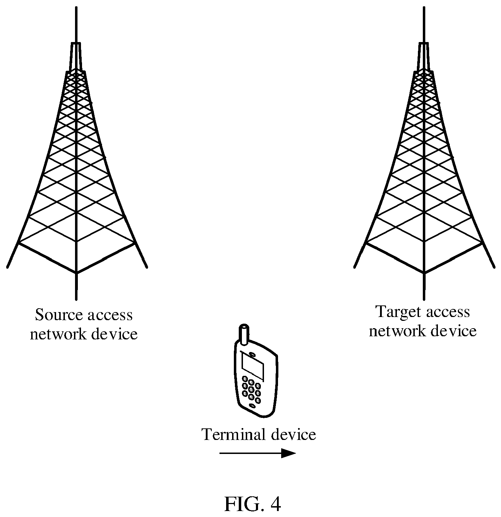

FIG. 4 shows a communication scenario. As shown in FIG. 4, the communication scenario includes at least two access network devices and at least one terminal device. In this application, FIG. 4 is used as an example to describe embodiments of this application.

The access network device may be configured to transmit PDU session data to the terminal device in unicast mode, and may be further configured to transmit multicast service data to the terminal device in multicast mode or unicast mode. The scenario shown in FIG. 4 includes a source access network device and a target access network device. That the source access network device has established a connection (for example, an RRC connection) to the terminal device may be understood as that the terminal device is attached to the source access network device, and the terminal device needs to be handed over from the source access network device to the target access network device. After the terminal device establishes the connection to the source access network device, the terminal device and the source access network device may perform specific data transmission.

In a possible scenario, when the terminal device is attached to the source access network device, the terminal device may periodically send a signal measurement report to the source access network device. The source access network device determines, based on the signal measurement report of the terminal device, whether the terminal device needs to be handed over to another access network device, and select, for the terminal device based on the signal measurement report, a target access network device to which the terminal device is to be handed over. After the terminal device is disconnected from or detached from the source access network device, the terminal device cannot perform specific data transmission with the source access network device, for example, data transmission of a multicast service received by the terminal device in the source access network device.

In the scenario shown in FIG. 4, the terminal device receives the multicast service data by using the source access network device. When the terminal device is handed over from the source access network device to the target access network device, the multicast service of the terminal device may be interrupted, and a multicast service of another terminal that receives the multicast service data by using the source access network device may also be interrupted. Therefore, in a process in which the terminal device is handed over from the source access network device to the target access network device, a problem of how to prevent continuity of multicast services of the terminal device and the another terminal device from being affected needs to be resolved.

In view of this, embodiments of this application provide a plurality of data transmission methods to ensure continuity of a multicast service of a terminal device.

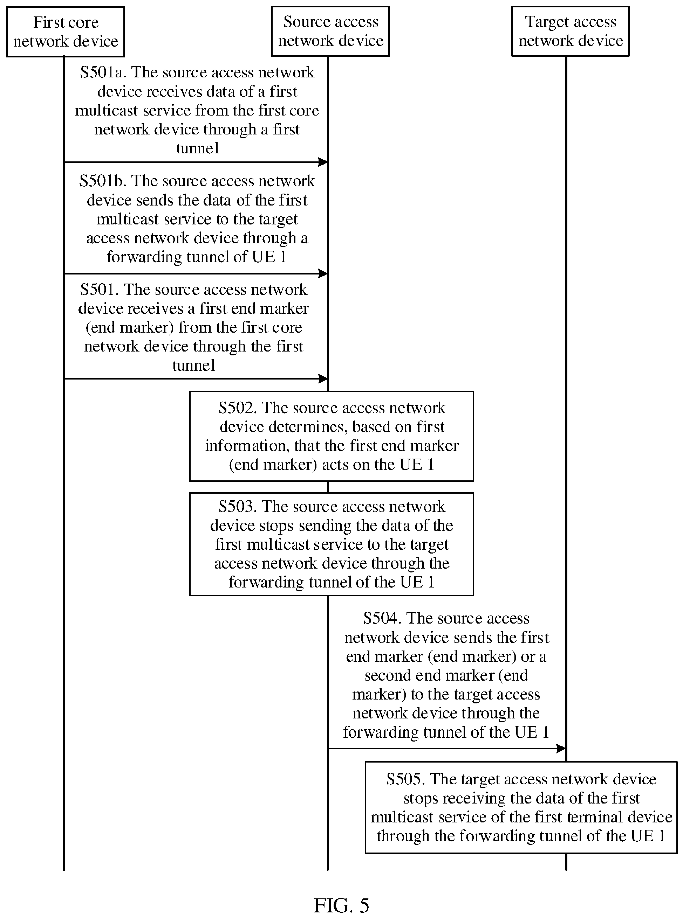

FIG. 5 is a schematic flowchart corresponding to a data transmission method according to an embodiment of this application. In all solutions described in this specification, it is assumed that a multicast service that UE 1 joins in a source access network device is a first multicast service. As shown in FIG. 5, the method includes the following steps.

Step S501. The source access network device receives a first end marker from a first core network device through a first tunnel.

The first tunnel is a multicast session tunnel, and the first tunnel is used to transmit data of the first multicast service.

The first end marker includes first information, and the first information is used to determine the first terminal device.

For example, the first information is an identifier of the UE 1. For another example, the first information is a temporary identifier of the UE 1 agreed on by the source access network device and the core network device. For example, the agreement manner may be as follows: The source access network device generates the temporary identifier of the UE 1 and sends a handover request message of the UE 1 to a target access network device, where the handover request message carries the temporary identifier. Then, the target access network device sends an N2 path switching request message to an AMF, where the N2 path switching request message carries the temporary identifier. Next, the AMF sends a PDU session context update request to an SMF, where the PDU session context update request carries the temporary identifier, to be used by the SMF to construct the first end marker including the first information. If a UPF constructs the first end marker, the SMF notifies the UPF. If an MCF constructs the first end marker, the SMF notifies the MCF. If an MUF constructs the first end marker, the SMF may notify the MCF, and the MCF notifies the MUF. The foregoing notification manners are merely examples. This is not limited in this embodiment of this application.

Optionally, the source access network device receives a second end marker from the first core network device through a second tunnel, where the second end marker may not include the first information. The second tunnel is a PDU session tunnel, where the PDU session tunnel is used to transmit data of a PDU session of the UE 1.

Step S502. The source access network device determines, based on the first information, that the first end marker acts on the UE1.

That the first end marker acts on the UE 1 may be understood as that the first end marker acts on the UE 1 but does not act on another terminal device participating in the first multicast service.

It may be understood that the multicast service is at a service level. If another terminal device receives the data of the first multicast service in the source access network device, after the source access network device receives the first end marker, because the first end marker does not act on the another terminal device, the another terminal device may further continue to receive the data of the first multicast service.

Step S503. The source access network device stops sending the data of the first multicast service to the target access network device through a forwarding tunnel of the UE 1.

Specifically, in response to receiving the first end maker, the source access network device stops sending the data of the first multicast service to the target access network device through the forwarding tunnel of the UE 1.

It may be understood that, because the first end marker is the last data packet sent to the target access network device through the forwarding tunnel of the UE 1, after receiving the first end marker, the source access network device stops replicating the data of the first multicast service that is received after the first end marker is received, and stops forwarding the data of the first multicast service to the target access network device.

In a first optional implementation, the forwarding tunnel of the UE 1 includes a first forwarding tunnel and a second forwarding tunnel. The first forwarding tunnel is a forwarding tunnel corresponding to the first multicast service of the UE 1, and is used to forward the data of the first multicast service of the UE 1. The second forwarding tunnel is a forwarding tunnel corresponding to the PDU session of the UE 1, and is used to forward the data of the PDU session of the UE 1. Optionally, after receiving the first end marker, the source access network device may send the first end marker to the target access network device through the first forwarding tunnel. Optionally, after receiving the first end marker and the second end marker, the source access network device may send the first end marker or the second end marker to the target access network device through the first forwarding tunnel.

In a second optional implementation, the forwarding tunnel of the UE 1 is the second forwarding tunnel, and the second forwarding tunnel is used to forward the data of the PDU session of the UE 1 and the data of the first multicast service of the UE 1. Optionally, after receiving the first end marker and the second end marker, the source access network device sends the first end marker or the second end marker to the target access network device through the first forwarding tunnel.

Before S501, the method shown in FIG. 5 may further include the following steps:
S501a. The source access network device receives the data of the first multicast service from the first core network device through the first tunnel.

Specifically, the data of the first multicast service includes a first quality of service flow identifier QFI. The first QFI may be understood as a QFI used when the data of the first multicast service is transmitted through a multicast service tunnel.

Optionally, the source access network device receives the PDU session data from the first core network device through the second tunnel.

S501b. The source access network device sends the data of the first multicast service to the target access network device through the forwarding tunnel of the UE 1.

Optionally, the source access network device replicates first data, and sends the replicated first data to the target access network device through the forwarding tunnel of the UE 1. The first data is a part or all of the data of the first multicast service received by the source access network device. The data of the first multicast service in S501b and S503 may be replaced with the first data.

Corresponding to the first optional implementation in S503, the source access network device sends the data of the first multicast service to the target access network device through the first forwarding tunnel. Optionally, the source access network device sends the PDU session data to the target access network device through the second forwarding tunnel.

It may be understood that, the UE 1 joins the first multicast service in the source access network device. In a process in which the UE 1 is handed over from the source access network device to the target access network device, the source access network device still receives the multicast data of the first multicast service through a first multicast session tunnel. For the handed-over UE 1, the source access network device replicates received multicast service data and forwards the multicast service data to the target access network device through the forwarding tunnel of the UE 1.

For example, on the source access network device side, if only the UE 1 receives the data of the first multicast service, the source access network device may directly forward the received data of the first multicast service to the target access network device. For another example, if a plurality of UEs receive the data of the first multicast service in the source access network device, after receiving the data of the first multicast service, the source access network device replicates a part or all of multicast service data required by the UE 1, and forwards the replicated multicast service data to the target access network device through a multicast session forwarding tunnel.

Corresponding to the second optional implementation in S503, the source access network device determines, based on a first mapping relationship, a second QFI corresponding to the first QFI, where the first mapping relationship includes a correspondence between the first QFI and the second QFI, and the second QFI is a QFI used when the data of the first multicast service is transmitted through the PDU session tunnel. The source access network device replaces the first QFI in the data of the first multicast service with the second QFI, and the source access network device sends the data part of the first multicast service and the second QFI to the target access network device through the second forwarding tunnel.

After S503, the method shown in FIG. 5 may further include the following steps.

Step S504. The source access network device sends the first end marker or the second end marker to the target access network device through the forwarding tunnel of the UE 1.

For example, in an implementation, the source access network device may forward only the second end marker to the target access network device through a multicast session forwarding tunnel or a PDU session forwarding tunnel. In another implementation, the source access network device may replicate the first end marker to obtain a third end marker, and forward the first end marker and the third end marker to the target access network device through a multicast session forwarding tunnel and a PDU session forwarding tunnel respectively. In another implementation, the source access network device may replicate the second end marker to obtain a fourth end marker, and forward the second end marker and the fourth end marker to the target access network device through a multicast session forwarding tunnel and a PDU session forwarding tunnel respectively.

Step S505. The target access network device stops receiving the data of the first multicast service of the first terminal device through the forwarding tunnel of the UE 1.

Corresponding to the first optional implementation in S503, the target access network device stops receiving the data of the first multicast service of the first terminal device through the first forwarding tunnel. Optionally, the target access network device stops receiving the data of the first multicast service of the first terminal device through the second forwarding tunnel. Optionally, when receiving the second end marker, the target access network device performs an operation that is specified in a 3GPP technical specification and that is performed after receiving a PDU session end marker.

Corresponding to the second optional implementation in S503, the target access network device stops receiving the data of the first multicast service of the first terminal device through the second forwarding tunnel.

For example, when receiving the first end marker through the multicast session forwarding tunnel, the target access network device may determine, based on the first information included in the first end marker, that the first end marker acts on the UE 1, or may determine, based on the multicast session forwarding tunnel, that the first end marker acts on the UE 1. The target access network device stops receiving the data of the first multicast service of the UE 1 from the source access network device.

For another example, as described above, a multicast service may be associated with a multicast session tunnel. For example, PDU sessions may be in a one-to-one correspondence with terminal devices and multicast services of the terminal devices. In other words, a PDU session of the UE 1 is associated with the first multicast service (that is, the UE 1 joins the multicast service by using the PDU session). Therefore, when receiving the first end marker through the PDU session forwarding tunnel, the target access network device may determine, based on the first information included in the first end marker or the PDU session forwarding tunnel, that the first end marker acts on the UE 1, and may determine, based on an association relationship between the PDU session and the first multicast service, the first multicast service associated with the PDU session of the UE 1. The target access network device determines that the first end marker is the last data packet of the first multicast service of the UE 1, and stops receiving the data of the first multicast service of the UE 1 from the source access network device. In the foregoing method, the core network device constructs an enhanced first end marker, and delivers the enhanced first end marker to the source access network device through the first multicast session tunnel. The source access network device determines, based on the first information included in the first end marker, that the first end marker acts on the UE 1. The source access network device stops forwarding the data of the first multicast service to the target access network device through the forwarding tunnel of the UE 1, and data of a first multicast service of another UE served by the source access network device can still be normally sent and received. This prevents the source access network device side from affecting continuity of the first multicast service of the another UE that is receiving the data of the first multicast service, ensures continuity of the first multicast service of the UE 1, and further ensures continuity of the first multicast service of the another UE on the source access network device side.

In conclusion, in the embodiment (referred to as solution 1) shown in FIG. 5, the core network device may construct the first end marker (end marker), and the first end marker may be delivered to the source access network device through the first multicast session tunnel. The first end marker includes the first information, and the first information is used to indicate the UE 1. The source access network device determines, based on the first information, that the first end marker acts on the UE 1. This prevents, after the source access network device receives the first end marker through the first multicast session tunnel, the source access network device from affecting another UE that is receiving the data of the first multicast service (multicast service corresponding to the first multicast session tunnel), ensures continuity of the first multicast service of the UE 1, and further ensures continuity of the first multicast service of the another UE on the source access network device side.

For example, the forwarding tunnel is a PDU session forwarding tunnel. For example, in a handover process of the UE 1, the source access network device forwards the data of the first multicast service to the target access network device through the PDU session forwarding tunnel (that is, the source access network device replicates multicast service data (a multicast QoS flow) in the multicast session tunnel, and then maps the multicast service data to a unicast QoS flow in the PDU session for forwarding). After receiving the first end marker, the source access network device stops replicating the multicast service data (that is, the multicast QoS flow) from the first multicast session tunnel, stops mapping the multicast QoS flow to the unicast QoS flow, and stops forwarding the data of the first multicast service to the target access network device through the PDU session forwarding tunnel of the UE 1.

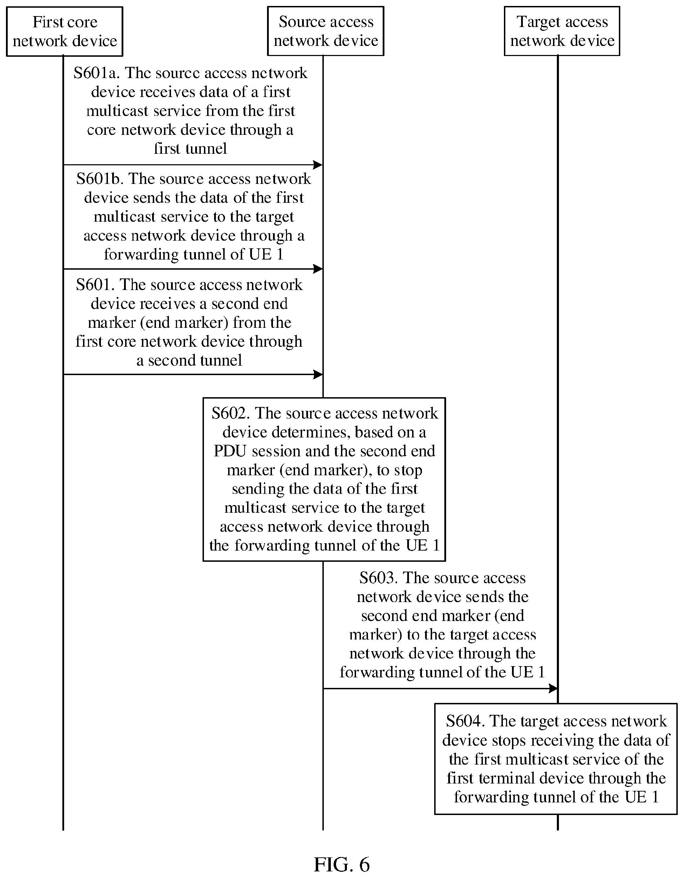

FIG. 6 is a schematic flowchart corresponding to another data transmission method according to an embodiment of this application. As shown in FIG. 6, the method includes the following steps.

Step S601. A source access network device receives a second end marker from a first core network device through a second tunnel.

The second tunnel is a PDU session tunnel of a first terminal device, and the second tunnel is used to transmit data of a PDU session of the first terminal device.

In an implementation, the source access network device receives only the second end marker. Therefore, in addition to an end marker of a first multicast service of the UE 1, the second end marker herein may be further used to represent an end marker of the PDU session of the UE 1.

Correspondingly, when a third construction condition is met, the first core network device constructs the second end marker. For example, the third construction condition may include: There is a complete transmission path of the first multicast service between a target access network device and a core network device, and there is a complete transmission path of the PDU session of the UE 1 between the target access network device and the core network device.

Step S602. The source access network device determines, based on the PDU session and the second end marker, to stop sending data of the first multicast service to the target access network device through a forwarding tunnel of the UE 1.

Specifically, in response to the second end marker, the source access network device stops sending the data of the first multicast service to the target access network device through the forwarding tunnel of the UE 1.

The PDU session tunnel may be in a one-to-one correspondence with the UE 1 and the PDU session of the UE 1, and the PDU session is associated with the first multicast service. Therefore, the source access network device may determine, based on the PDU session and the second end marker, that the second end marker may act on the first multicast service of the UE 1.

In an optional implementation, the forwarding tunnel of the UE 1 includes a first forwarding tunnel and a second forwarding tunnel. The first forwarding tunnel is a forwarding tunnel corresponding to the first multicast service of the UE 1, and is used to forward the data of the first multicast service of the UE 1. The second forwarding tunnel is a forwarding tunnel corresponding to the PDU session of the UE 1, and is used to forward the data of the PDU session of the UE 1. Optionally, after receiving the second end marker, the source access network device sends the second end marker to the target access network device through the first forwarding tunnel. Optionally, after receiving the second end marker, the source access network device sends the second end marker to the target access network device through the second forwarding tunnel.

In a second optional implementation, the forwarding tunnel of the UE 1 is the second forwarding tunnel, and the second forwarding tunnel is used to forward the data of the PDU session of the UE 1 and the data of the first multicast service of the UE 1. After receiving the second end marker, the source access network device sends the second end marker to the target access network device through the second forwarding tunnel.

The method shown in FIG. 6 may further include S601a and S601b before S601, and S601a and S601b are the same as S501a and S501b in FIG. 5. Details are not described herein.

Step S603. The source access network device sends the second end marker to the target access network device through the forwarding tunnel of the UE 1.

Step S604. The target access network device stops receiving the data of the first multicast service of the first terminal device through the forwarding tunnel of the UE 1.

Corresponding to the first optional implementation in S602, the target access network device stops receiving the data of the first multicast service of the first terminal device through the first forwarding tunnel. Optionally, the target access network device stops receiving the data of the first multicast service of the first terminal device through the second forwarding tunnel.

Corresponding to the second optional implementation in S602, the target access network device stops receiving the data of the first multicast service of the first terminal device through the second forwarding tunnel.

In conclusion, in the embodiment (solution 2) shown in FIG. 6, the core network device constructs only the second end marker, and delivers the second end marker to the source access network device through a first PDU session tunnel. After the source access network device receives the second end marker, in addition to performing an operation of receiving a PDU session end marker (namely, the second end marker) specified in a 3GPP technical specification, the source access network device further needs to stop replicating multicast service data (namely, a multicast QoS flow) from a first multicast session tunnel, and stops forwarding the data of the first multicast service to the target access network device through a multicast session forwarding tunnel. Then, the source access network device forwards the second end marker to the target access network device through a PDU session forwarding tunnel or the multicast session forwarding tunnel of the UE 1.

Correspondingly, in an optional implementation, after receiving the second end marker through the PDU session forwarding tunnel or the multicast session forwarding tunnel of the UE 1, in addition to performing an operation of receiving the PDU session end marker specified in the 3GPP technical specification, the target access network device further needs to stop receiving, through the multicast session forwarding tunnel, the data that is of the first multicast service and that is forwarded by the source access network device. In another optional implementation, after receiving the second end marker, in addition to performing an operation of receiving the PDU session end marker (namely, the second end marker) specified in the 3GPP technical specification, the source access network device further needs to stop replicating the multicast service data (namely, the multicast QoS flow) from the first multicast session tunnel, stop mapping the multicast QoS flow to a unicast QoS flow, and stop forwarding the data of the first multicast service to the target access network device through the PDU session forwarding tunnel of the UE 1. Then, the source access network device forwards the second end marker to the target access network device through the PDU session forwarding tunnel of the UE 1. Correspondingly, after receiving the second end marker through the PDU session forwarding tunnel of the UE 1, in addition to performing an operation of receiving the PDU session end marker specified in the 3GPP technical specification, the target access network device further needs to stop receiving, through the PDU session forwarding tunnel, the data (that is, the unicast QoS flow to which the multicast QoS flow is mapped) that is of the first multicast service and that is forwarded by the source access network device.

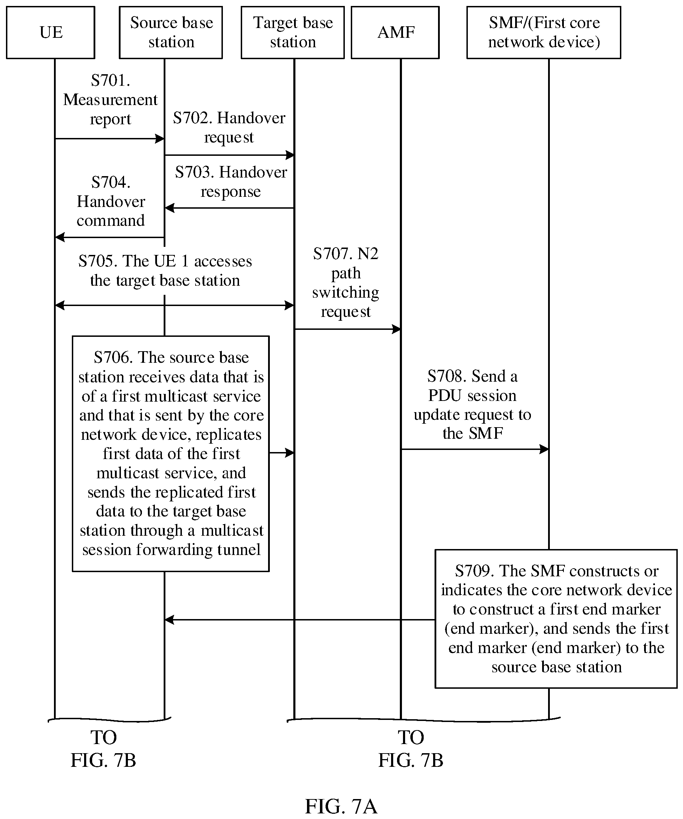

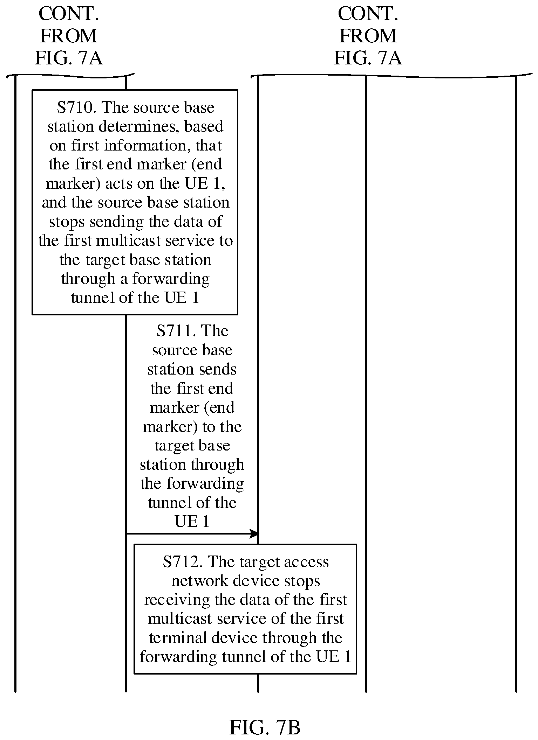

FIG. 7A and FIG. 7B are a schematic flowchart corresponding to another data transmission method according to an embodiment of this application. As shown in FIG. 7, the method includes the following steps.

Step S701. UE 1 sends a measurement report to a source access network device. Correspondingly, the source access network device receives the measurement report sent by the UE, and the source access network device selects, for the UE based on the measurement report, a target access network device to which the UE is to be handed over.

Step S702. The source access network device sends a handover request message to the target access network device. Correspondingly, the target access network device receives the handover request message sent by the source access network device.

For example, the handover request message includes but is not limited to some or all of the following information:
first information, PDU session information of the UE 1, a QFI of a service flow that the source access network device expects to forward through a forwarding tunnel of the UE 1, forwarding tunnel information of the source access network device, and indication information for establishing a multicast session forwarding tunnel.

The following separately explains and describes the foregoing related information.
(1) As described above, the first information may be an identifier of the UE 1 or a temporary identifier of the UE 1, or may be other information used to determine the UE 1. This is not limited in this embodiment of this application. For example, the first information is an index of a first correspondence, and the first correspondence includes the index, the UE 1, a PDU session of the UE 1, and a first multicast service associated with the PDU session of the UE 1.
(2) The PDU session information may include, for example, a PDU session identifier and QoS information of a unicast QoS flow of a service included in the PDU session. The QoS information of the unicast QoS flow may include a QFI and a QoS parameter of the unicast QoS flow. Optionally, if the PDU session of the UE 1 is associated with a multicast service, the PDU session information of the UE 1 further includes multicast service information associated with the PDU session, where the multicast service information may include a multicast service identifier and QoS information of a multicast QoS flow of the multicast service, and the QoS information of the multicast QoS flow may include a QFI and a QoS parameter of the multicast QoS flow.
   For example, when the UE 1 applies to join the multicast service in the source access network device, the UE 1 stores information about the multicast service in a context of the PDU session of the UE 1, that is, the multicast service associated with (or included in) the PDU session of the UE 1 is, for example, the PDU session storing the information about the multicast service. How to associate the multicast service with the PDU session is not limited in this specification.
(3) The indication information for establishing the multicast session forwarding tunnel may be, for example, an indication information element and is used to indicate that a forwarding tunnel (which may be a direct forwarding tunnel or an indirect forwarding tunnel), for a multicast session tunnel, between the source access network device and the target access network device needs to be established.
(4) Forwarding tunnel information of the source access network device: A forwarding tunnel may include the multicast session forwarding tunnel and/or a PDU session forwarding tunnel. Correspondingly, the forwarding tunnel information may include multicast session forwarding tunnel information and/or PDU session forwarding tunnel information. Words repeatedly cited below are not repeatedly described.
   Correspondingly, the target access network device may establish the multicast session forwarding tunnel with the source access network device based on the multicast session forwarding tunnel information of the source access network device and multicast session forwarding tunnel information of the target access network device. For details, refer to a manner of establishing the PDU session forwarding tunnel. Details are not described herein again. For example, the multicast session forwarding tunnel and the PDU session forwarding tunnel may be GTP-U tunnels.
(5) QFI of the service flow that the source access network device expects to forward through the forwarding tunnel: The forwarding tunnel may include the PDU session forwarding tunnel and/or the multicast session forwarding tunnel. Corresponding to that the target access network device supports a multicast function, the forwarding tunnel may include the multicast session forwarding tunnel and the PDU session forwarding tunnel. For example, the handover request message may include a QFI of a unicast QoS flow that the source access network device expects to forward through the PDU session forwarding tunnel, and a QFI of a multicast QoS flow that the source access network device expects to forward through the multicast session forwarding tunnel. For another example, corresponding to that the target access network device does not support a multicast function, when the source access network device forwards multicast service data through the PDU session forwarding tunnel, in addition to the QFI of the unicast QoS flow that the source access network device expects to forward through the PDU session forwarding tunnel, the handover request message may include a QFI of a unicast QoS flow to which the QFI of the multicast QoS flow and the QFI of the multicast QoS flow is mapped.

Step S703. The target access network device sends a handover response message to the source access network device. Correspondingly, the source access network device receives the handover response message sent by the target access network device.

For example, the handover response message includes but is not limited to some or all of the following information:
radio bearer configuration information configured by the target access network device for the UE 1, a QoS flow identifier QFI that the target access network device supports to forward through the forwarding tunnel, and a forwarding tunnel endpoint identifier of the target access network device.

The following separately explains and describes the information included in the handover response message.
(1) Radio bearer configuration information configured by the target access network device for the UE 1: For example, the target access network device prepares a radio resource for the UE 1 based on the QoS information of the service flow included in the handover request message. Specifically, the target access network device may determine a quantity of air interface data radio bearers (Data Radio Bearers, DRBs) and a mapping relationship between QFIs and DRBs based on a QoS parameter corresponding to a QFI of each service flow. In addition, the target access network device may further determine, based on a QoS parameter corresponding to a QFI to which each DRB is mapped, a configuration parameter (for example, whether a radio link control (Radio Link Control, RLC) layer corresponding to the DRB uses an acknowledged mode or a non-acknowledged mode) corresponding to the DRB. Finally, the target access network device creates a corresponding DRB.
(2) QoS flow identifier QFI that the target access network device supports to forward through the forwarding tunnel: For example, corresponding to that the target access network device supports a multicast function, if the multicast QoS flow can be forwarded through the forwarding tunnel, the handover response message may include a QFI that is of the multicast QoS flow and that the target access network device supports to forward. For another example, corresponding to that the target access network device does not support a multicast function, if the handover request message carries a QFI of a unicast QoS flow corresponding to the QFI of the multicast QoS flow, the target access network device may include, in the handover response message, a QFI, corresponding to the QFI of the multicast QoS flow, that is of a unicast QoS flow and that the target access network device supports to forward.
(3) The forwarding tunnel information of the target access network device includes the multicast session forwarding tunnel information and/or the PDU session forwarding tunnel information on the target access network device.

Step S704. After receiving the handover response message, the source access network device sends a handover command message to the UE 1. Correspondingly, the UE 1 receives the handover command message from the source access network device. After receiving the handover command message, the UE 1 disconnects from the source access network device.

For example, the handover command message may include the radio bearer configuration information configured by the target access network device for the UE 1, so that the UE 1 accesses the target access network device based on the radio bearer configuration information.

Step S705. The UE 1 accesses the target access network device.

Step S706a. The source access network device receives data of the first multicast service sent by a core network device.

Step S706b. The source access network device sends first data to the target access network device through the forwarding tunnel of the UE 1. Correspondingly, the target access network device receives, through the multicast session forwarding tunnel, the first data of the first multicast service sent by the source access network device.

The first data may be multicast service data, obtained by the source access network device, of the QFI, included in the handover response message, of the multicast QoS flow that corresponds to the first multicast service and that the target access network device supports to forward. To be specific, the first data may be a part or all of the data of the first multicast service received by the source access network device from the core network device.

In an optional implementation, the source access network device sends the first data to the target access network device through the multicast session forwarding tunnel. Specifically, the source access network device replicates the first data, and sends the replicated first data to the target access network device through the multicast session forwarding tunnel.

For example, when the source access network device forwards the data of the first multicast service to the target access network device through the multicast session forwarding tunnel, a forwarding procedure may include the following steps: The source access network device receives the data of the first multicast service from the core network device, and replicates the first data of the first multicast service to obtain second data; and the source access network device sends the second data to the target access network device through the multicast session forwarding tunnel.

In another optional implementation, when the source access network device forwards the data of the first multicast service to the target access network device through the PDU session forwarding tunnel, a forwarding procedure may include the following steps:
The source access network device receives the data of the first multicast service from the device, and replicates the first data of the first multicast service to obtain second data. For example, the first data is a GTP-U packet, and the GTP-U packet includes a header and a data part, where the packet header includes a QFI field. When the first data is delivered through a first multicast session tunnel, the first data is multicast service data, and the first data includes the QFI of the multicast QoS flow. Because the second data is replicated data of the first data, the second data also includes the QFI of the multicast QoS flow.

The source access network device performs mapping processing on the second data, maps the multicast QoS flow to the unicast QoS flow, and then transmits the unicast QoS flow through the PDU session forwarding tunnel. For example, a mapping processing procedure is as follows: The source access network device determines a QFI included in the second data, and determines, based on a first mapping relationship, a QFI of a unicast QoS flow corresponding to the QFI included in the second data. For ease of description, the QFI included in the second data is referred to as a first QFI below, and the QFI of the unicast QoS flow corresponding to the QFI included in the second data is referred to as a second QFI. The source access network device replaces the first QFI in the second data with the second QFI. The first mapping relationship includes a correspondence between the QFI of the multicast QoS flow and the QFI of the unicast QoS flow.

For example, the first mapping relationship may be generated by an SMF. The SMF determines the first mapping relationship based on the QFI of the unicast QoS flow included in the PDU session of the UE 1 and the QFI of the QoS flow included in the first multicast service, and sends the first mapping relationship to the source access network device.

It should be understood that, for ease of differentiation, the QFI of the unicast QoS flow determined by the SMF is different from an existing QFI of a unicast QoS flow (the unicast QoS flow included in the PDU session of the UE 1).

For example, it is assumed that QFI values that may be used for the unicast QoS flow are 10 to 64. If a terminal device already has two unicast services, for example, YOUKU and WeChat, where YOUKU includes three unicast QoS flows: QFI=12, QFI=13, and QFI=16, and WeChat includes two unicast QoS flows: QFI=11 and QFI=12. In this case, the two unicast services correspond to four unicast QoS flows in total: QFI=11, QFI=12, QFI=13, and QFI=16. Therefore, 50 QFI values of the unicast QoS flow are still available, and the SMF maps the QFI of the multicast QoS flow to an unused QFI of the unicast QoS flow.

For example, it is assumed that QFIs of the multicast QoS flow included in the first multicast service include QFI=1, QFI=2, and QFI=3, and QFIs of a unicast QoS flow included in a unicast service of the UE 1 are QFI=11, QFI=2, QFI=3, and QFI=16. In this case, the first mapping relationship may be shown in Table 1. Table 1 shows an example of the first mapping relationship provided in this embodiment of this application.

**Table 1**

| QFI of a multicast QoS flow | QFI of a unicast QoS flow |
|---|---|
| 1 | 14 |
| 2 | 15 |
| 3 | 17 |

The foregoing process of determining the QFI of the unicast QoS flow based on the QFI of the multicast QoS flow may be referred to as mapping. In embodiments of this application, the correspondence between the QFI of the multicast QoS flow and the QFI of the unicast QoS flow is referred to as the first mapping relationship. During specific implementation, one multicast QoS flow may be mapped to one unicast QoS flow, or a plurality of multicast QoS flows may be mapped to one unicast QoS flow. A mapping manner is not limited in embodiments of this application.

It should be understood that a session management function network element may first map the multicast QoS flow to the unicast QoS flow, and add the unicast QoS flow to the PDU session for transmission. This is because a terminal device requests, in the source access network device, both a service transmitted by using the PDU session and a multicast service. The service transmitted by using the PDU session is transmitted through the PDU session tunnel, and the multicast service is transmitted through the multicast session tunnel, so that service continuity of the terminal device can be ensured. The service continuity includes continuity of the service in the PDU session and continuity of the multicast service. However, because the terminal device is handed over from the source access network device to the target access network device, if a multicast QoS flow in a multicast session tunnel of the source access network device is not first mapped to a unicast QoS flow in a PDU session tunnel in which a PDU session of the source access network device is located, and if the target access network device does not support multicast (that is, a multicast session tunnel cannot be established, where the multicast session tunnel refers to a piece of data received in the tunnel, and an access network device air interface may send the data to the UE in point-to-multipoint mode) after the handover, the multicast service of the terminal device may be interrupted, and service continuity cannot be maintained. Therefore, to ensure the service continuity of the terminal device, the multicast QoS flow may be mapped to the unicast QoS flow in the source access network device (that is, before the terminal device is handed over to the target access network device) to perform unicast handover. After learning of multicast capability information of the target access network device in the handover procedure, the session management function network element may perform an operation depending on whether the target access network device supports multicast, so that the terminal device is added to the multicast service in an appropriate manner on the target access network device.

In a possible implementation, in step S707, when the target access network device receives the data of the first multicast service forwarded by the source access network device, the UE 1 may have not accessed the target access network device. In this case, the target access network device may buffer the received data of the first multicast service. After the UE 1 accesses the target access network device, the target access network device sequentially sends the buffered data of the first multicast service to the UE 1.

Specifically, the target access network device sends the data of the first multicast service to the UE 1 through an air interface of the PDU session of the UE 1. The PDU session of the UE 1 may be a PDU session associated with the first multicast service, or may be another PDU session of the UE 1. This is not limited in embodiments of this application.

For example, when the target access network device receives the second data (including the first QFI) of the first multicast service from the source access network device through the multicast session forwarding tunnel, the target access network device needs to determine, based on the first mapping relationship, the second QFI corresponding to the first QFI included in the second data, determine, based on a second mapping relationship, a DRB configuration corresponding to the second QFI, decapsulate the second data, remove a GPT-U header, map a data part to a corresponding DRB, and send the data part to the UE 1.

For another example, when the target access network device supports a multicast function, the target access network device may further send the second data to the UE 1 in point-to-multipoint mode.

Step S707. The target access network device sends an N2 path switching request to an AMF. Correspondingly, the AMF receives the N2 path switching request.

Specifically, the N2 path switching request may include but is not limited to one or more of the following:
the first information, tunnel information of the target access network device, a QFI of a unicast QoS flow that is successfully handed over and a QFI of a unicast QoS flow that fails to be handed over in the PDU session, a QFI of a multicast QoS flow that is successfully handed over and a QFI of a multicast QoS flow that fails to be handed over, first indication information indicating whether the multicast service associated with the PDU session of the UE 1 exists on the target access network device, and indication information indicating that the multicast session forwarding tunnel needs to be established.

For example, the QFI may be encapsulated in an N2 SM message.

The following separately explains and describes the information that may be included in the handover response message.
(1) The first information is used to uniquely identify the handed-over UE 1.
(2) The tunnel information of the target access network device may include PDU session tunnel information and/or multicast session tunnel information. The PDU session tunnel information of the target access network device is used by a UPF to establish the PDU session tunnel of the UE 1.
   The multicast session tunnel information of the target access network device is used by the first core network device to establish the multicast session tunnel with the target access network device. For example, the first core network device may be a UPF or an MUF.
(3) QFI of the multicast QoS flow that is successfully handed over and QFI of the multicast QoS flow that fails to be handed over: The QFI of the multicast QoS flow that is successfully handed over is a QFI of a multicast QoS flow that the target access network device supports to forward, and the QFI of the multicast QoS flow that fails to be handed over is a QFI, of a multicast QoS flow, that the target access network device does not support to forward and that is in a QFI of a multicast QoS flow carried by the source access network device in the handover request message.
(4) QFI of the unicast QoS flow that is successfully handed over and QFI of the unicast QoS flow that fails to be handed over in the PDU session: The QFI of the unicast QoS flow that is successfully handed over is a QFI of a unicast QoS flow that the target access network device supports to forward, and the QFI of the unicast QoS flow that fails to be handed over is a QFI, of a unicast QoS flow, that the target access network device does not support to forward and that is in a QFI of a unicast QoS flow carried by the source access network device in the handover request message.
(5) The first indication information may be used to indicate whether the target access network device is running (or has) the first multicast service of the UE 1.

For example, the first indication information is an indication value of at least one bit. One bit is used as an example. For example, if a bit value of the bit is 1, it indicates that the first multicast service is being run; or if a bit value of the bit is 0, it indicates that the first multicast service is not run. It should be noted that the information indicated by the indication value is merely an example, and indication content corresponding to the indication value is not limited in embodiments of this application.

For example, if the target access network device supports a multicast function and is running the first multicast service, it indicates that the core network device and the target access network device have a complete transmission path of the first multicast service, and the core network device may send the data of the first multicast service to the target access network device. For example, corresponding to that the target access network device supports a multicast function, the complete transmission path of the first multicast service includes a transmission tunnel from the MUF to the UPF and to the target access network device, where the tunnel may be used to transmit the data of the first multicast service.

Based on capability indication information, if the capability indication information indicates that the target access network device does not support a multicast function, when the SMF receives a PDU session update request sent by the AMF, the SMF may determine to send the data of the first multicast service to the target access network device through the PDU session tunnel or in another transmission mode. Details are described below.

(6) The indication information for establishing the multicast session forwarding tunnel may be an indication information element, used to notify the SMF that a forwarding tunnel for the multicast session tunnel needs to be established between the source access network device and the target access network device.

In embodiment 1, the target access network device supports a multicast function. It is assumed that in step S708, the SMF determines that the target access network device supports a multicast function and is running the first multicast service.

Step S708. The AMF sends the PDU session update request to the SMF. Correspondingly, the SMF receives the PDU session update request sent by the AMF.

Specifically, the PDU session update request may include but is not limited to some or all information included in the N2 switching request.

In addition, if the PDU session of the handed-over UE is associated with the multicast service, the PDU session update request sent by the AMF to the SMF further includes capability information of the target access network device.

Step S709. The SMF constructs a first end marker, or the SMF notifies the first core network device to construct the first end marker, and sends the first end marker to the source access network device.

For step S710 to step S712, refer to the procedure steps of step S501 to step S505 in FIG. 5. Details are not described herein.

It should be noted that, when the target access network device establishes a second multicast session tunnel with the core network device, the core network device (the UPF or the MUF) may send the data of the first multicast service to the target access network device through the second multicast session tunnel. Herein, the target access network device may receive the data of the first multicast service from the source access network device, or may receive the data of the first multicast service from the core network device. For example, the data received from the source access network device is data of the first multicast service that exists before the first end marker is constructed, and the data received from the core network device is data of the first multicast service that is received after the second multicast session tunnel is established. To avoid disorder, the target access network device separately buffers the two parts of data in different queues. For example, the target access network device buffers the multicast data received from the source access network device in a queue 1, and buffers the multicast data received from the core network device in a queue 2. In this case, the target access network device needs to sequentially send the multicast data in the queue 1 to the UE 1. After sending the multicast data in the queue 1 and receiving the first end marker, the target access network device sends the multicast data in the queue 2 to the UE 1. For a manner of sending the multicast data in the queue 2, refer to related descriptions of sending the multicast data in the queue 1. Details are not described herein.

It should be understood that, for a target access network device that does not support a multicast function and a target access network device that supports a multicast function, an update procedure of a user plane tunnel between the target access network device and the core network device may be whether the core network device can establish the second multicast session tunnel with a target access network device. If the target access network device does not support a multicast function, the foregoing related information and procedure of establishing the second multicast session tunnel do not need to be performed.

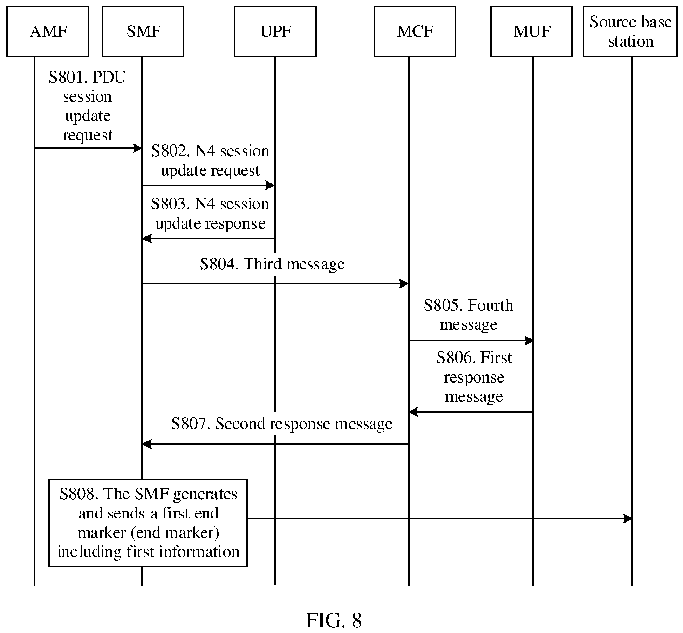

It should be understood that, in scenarios such as whether the target access network device supports a multicast function and whether the target access network device that supports a multicast function has the first multicast service of the UE 1, manners of generating an end marker on the core network device side are also different. The following describes, by using content shown in FIG. 8 to FIG. 10, processes in which the core network device constructs an end marker in different scenarios.

With reference to the content shown in FIG. 8 to FIG. 10, the following describes in detail a manner of constructing an end marker on the core network device side in step S710.

In the following embodiments, an example in which the target access network device supports a multicast function in the solution 1 is used to describe a manner of constructing the first end marker by the first core network device.

When a first construction condition is met, the first core network device constructs the first end marker. For example, the first construction condition may include: There is a complete transmission path of the first multicast service between the target access network device and the core network device, or the target access network device can receive or has received the data of the first multicast service.

The first core network device herein may be one of an SMF, a UPF, an MUF, or an MCF.

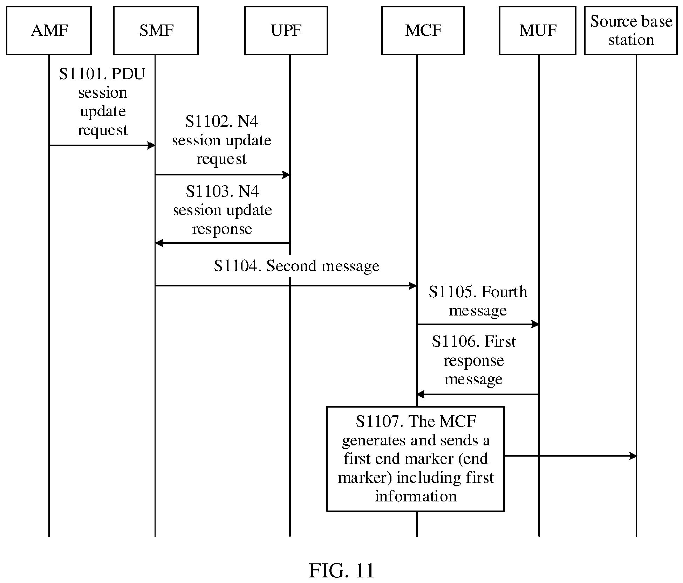

A manner of constructing a first end marker by an SMF is first described. FIG. 11 is a schematic flowchart corresponding to a manner of constructing a first end marker according to an embodiment of this application. As shown in FIG. 11, the method includes the following steps.

Step S801. The SMF receives a PDU session update request sent by an AMF.

For example, the PDU session update request includes but is not limited to multicast capability information of a target access network device, information about a second multicast session tunnel and an indication for establishing a multicast session tunnel forwarding tunnel, where the information about the second multicast session tunnel includes a second multicast session tunnel endpoint identifier of the target access network device and first information.

Step S802. The SMF sends an N4 session update request to a UPF. Correspondingly, the UPF receives the N4 session update request sent by the SMF.

For example, the N4 session update request includes tunnel information of the target access network device and tunnel information allocated by the SMF to the UPF, that is, the second multicast session tunnel endpoint identifier of the target access network device and a second multicast session tunnel endpoint identifier of the UPF.

It should be noted that step S802 is merely an example. The tunnel information of the target access network device and the tunnel information allocated by the SMF to the UPF may alternatively be carried in another message or dedicated signaling. This is not limited in this embodiment of this application. New information is carried in existing signaling herein to reduce signaling overheads.

Step S803. The UPF establishes, based on the tunnel information of the target access network device and the tunnel information allocated by the SMF to the UPF, the second multicast session tunnel with the target access network device, and the UPF sends an N4 session update response to the SMF. Correspondingly, the SMF receives the N4 session update response sent by the UPF.

Step S804. If no tunnel between the UPF and an MUF has been established, the SMF sends a third message to an MCF, where the third message is used to indicate the MCF to notify the MUF to establish a tunnel with the UPF. Correspondingly, the MCF receives the third message from the SMF.

The third message includes but is not limited to tunnel information of the tunnel between the UPF and the MUF, where the tunnel information includes a tunnel endpoint identifier that is of the tunnel between the UPF and the MUF and that is allocated by the SMF to the UPF.

It should be noted that step S804 is an optional step, and is not necessarily performed. It should be understood that the SMF can learn whether there is a tunnel established between the UPF and the MUF. A prerequisite of this step is that the SMF determines that no tunnel connection is established between the UPF and the MUF. If there is a tunnel between the UPF and the MUF, this step does not need to be performed. In addition, when this step needs to be performed, an execution sequence of step S804 is not strictly limited in this application. Step S804 may be performed after or before step S802, or step S802 and step S804 may be simultaneously performed. This is not limited in embodiments of this application.

Step S805. The MCF sends a fourth message to the MUF, where the fourth message includes a tunnel endpoint identifier allocated by the MCF to the MUF and a tunnel endpoint identifier of the UPF. Correspondingly, the MUF receives the fourth message sent by the MCF.

Step S806. The MUF establishes a tunnel with the UPF based on the fourth message, and sends a first response message to the MCF after establishment of the tunnel is completed. Correspondingly, the MCF receives the first response message.

Step S807. The MCF sends a second response message to the SMF. Correspondingly, the SMF receives the second response message.

The SMF determines, based on the third message, that there is a tunnel connection between the MUF and the UPF, and the SMF determines, based on the N4 session update response, that there is a second multicast session tunnel connection between the UPF and the target access network device.

Step S808. The SMF generates and sends a first end marker, where the first end marker includes the first information. For example, a path for sending the first end marker may be SMF→UPF→Source access network device.

The foregoing is a complete procedure in which the SMF constructs and sends the first end marker.

The following describes a manner of constructing a first end marker by a UPF.

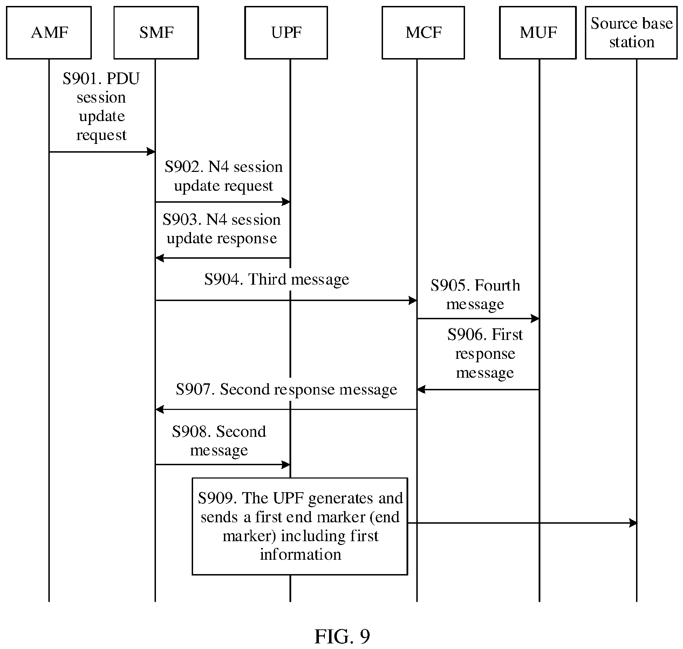

FIG. 9 is a schematic flowchart corresponding to another manner of constructing a first end marker according to an embodiment of this application. As shown in FIG. 9, the method includes the following steps.

Step S901 to step S907 are the same as step S801 to step S807 in FIG. 8. Details are not described herein again. The following describes only a difference.

Step S908. The SMF sends a second message to the UPF, where the second message is used to indicate the UPF to construct and send a first end marker. Correspondingly, the UPF receives the second message from the SMF.

The second message includes but is not limited to the first information.

Step S909. After receiving the second message, the UPF generates and sends the first end marker.

In another example, if there is already a connection between the MUF and the UPF, and no tunnel needs to be re-established, in step S902, the SMF may directly send the second message to the UPF. The second message includes but is not limited to the first information and tunnel information of the second multicast session tunnel. After establishment of the second multicast session tunnel is completed, the UPF generates and sends the first end marker including the first information. The UPF may further send an N4 session update response to the SMF.

The following describes a manner of constructing a first end marker by an MUF.

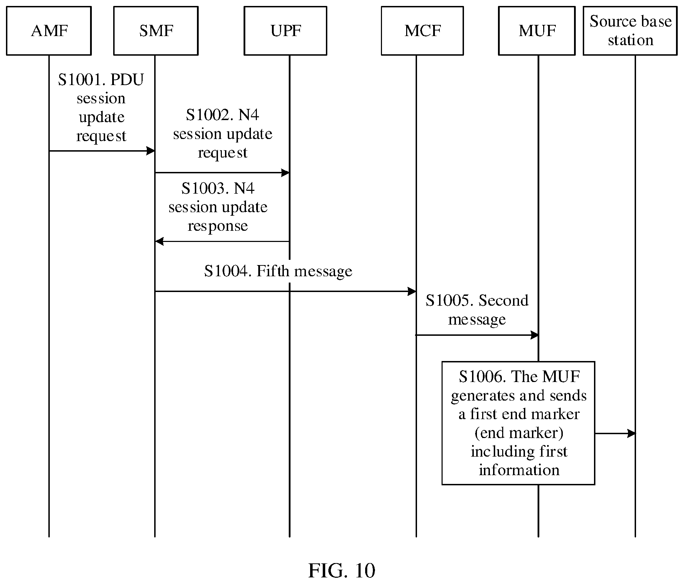

FIG. 10 is a schematic flowchart corresponding to another manner of constructing a first end marker according to an embodiment of this application. As shown in FIG. 10, the method includes the following steps.

Step S1001 to step S1006 are the same as step S801 to step S806 in FIG. 11. Details are not described herein again. The following describes only a difference.

Step S1004. The SMF sends a fifth message to the MCF, where the fifth message is used to indicate the MCF to notify the MUF to establish a tunnel with the UPF. Correspondingly, the MCF receives the fifth message from the SMF.

Step S1005. The MCF sends a second message to the MUF, where the second message may be used to indicate the MUF to construct and send a first end marker, and the first end marker includes the first information.

The second message includes but is not limited to the first information and the tunnel information of the UPF. The MUF sends the first end marker to a source access network device by using the tunnel between the MUF and the UPF and a first multicast session tunnel. For example, a path for sending the first end marker may be MUF→UPF→Source access network device.

Step S1006. The MUF generates and sends the first end marker including the first information.

The following describes a manner of constructing a first end marker by an MCF.

FIG. 11 is a schematic flowchart corresponding to another manner of constructing a first end marker according to an embodiment of this application. As shown in FIG. 11, the method includes the following steps.

Steps S1101 to S1003 are the same as steps S901 to S903 in FIG. 9. Details are not described herein again. The following describes only a difference.

Step S1104. The SMF sends a second message to the MCF, where the second message is used to indicate the MCF to generate and send a first end marker after a first construction condition is met. Correspondingly, the MCF receives the second message from the SMF.

For example, the second message includes but is not limited to the first information and the tunnel information of the UPF.

Step S1105. The MCF sends a fourth message to the MUF, where the fourth message includes a tunnel endpoint identifier allocated by the MCF to the MUF and a tunnel endpoint identifier of the UPF. Correspondingly, the MUF receives the fourth message sent by the MCF.

Step S1106. The MUF establishes a tunnel with the UPF based on the fourth message, and sends a first response message to the MCF after establishment of the tunnel is completed. Correspondingly, the MCF receives the first response message.

Step S1107. After receiving the N4 session update response and the first response message, the MCF generates and sends the first end marker, where the first end marker includes the first information. For example, a path for sending the first end marker may be MCF→MUF→UPF→Source access network device.

The foregoing first construction condition is that response information is received by the core network device in different scenarios. For details, refer to the descriptions in the foregoing embodiments.

A second core network device that constructs the second end marker may be an SMF or a UPF. An example in which the SMF constructs the second end marker is used for description. In step S802 in FIG. 8, the N4 session update request further includes information about a second PDU session tunnel, that is, a PDU session tunnel endpoint identifier of the target access network device and a PDU session tunnel endpoint identifier allocated by the SMF to the UPF. Correspondingly, after receiving the N4 session update request, the UPF establishes the second PDU session tunnel with the target access network device based on the information about the second PDU session tunnel. The UPF sends the N4 session update response to the SMF. After receiving the N4 session update response, the SMF generates and constructs the second end marker.

The second construction condition herein may be that the SMF receives the N4 session update response.

In the following embodiments, an example in which the target access network device does not support a multicast function in the solution 1 is used to describe a procedure of constructing the first end marker by the first core network device.

For a manner of constructing the first end marker by the first core network device, refer to related descriptions in Embodiment 2. FIG. 8 is used as an example. A difference lies in that because the target access network device does not support a multicast function, in step S802, the tunnel information of the target access network device and the tunnel information allocated by the SMF to the UPF that are included in the N4 session update request are respectively a second PDU session tunnel endpoint identifier of the target access network device and a second PDU session tunnel endpoint identifier of the UPF. In step S803, the UPF establishes the second PDU session tunnel between the UPF and the target access network device, and the UPF sends an N4 session update response to the SMF. For other procedures, refer to the specific descriptions in FIG. 8. Details are not described herein again.

For a manner of constructing the second end marker by the second core network device, refer to the manner in Embodiment 2. Details are not described herein again.

In the following embodiments, an example in which the target access network device supports a multicast function in the solution 2 is used to describe a manner of constructing the second end marker by the second core network device.

When a third construction condition is met, the second core network device constructs the second end marker. For example, the third construction condition may include: There is a complete transmission path of the first multicast service between the target access network device and the core network device, and there is a complete transmission path of the PDU session of the UE 1 between the target access network device and the core network device.

The second core network device herein may be an SMF or a UPF.

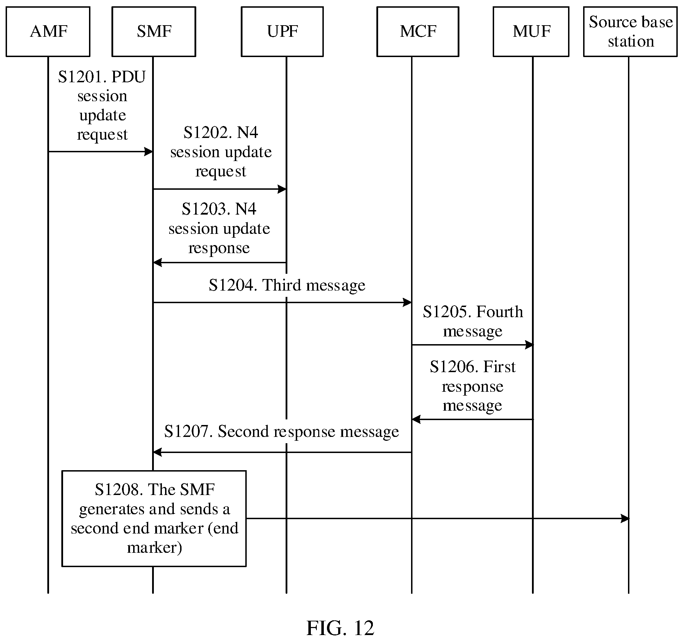

A manner of constructing a second end marker by an SMF is first described. FIG. 12 is a schematic flowchart corresponding to a manner of constructing a second end marker according to an embodiment of this application. As shown in FIG. 12, the method includes the following steps.

Step S1201. An SMF receives a PDU session update request sent by an AMF.

For example, the PDU session update request includes but is not limited to multicast capability information of a target access network device, information about a second PDU session tunnel, information about a second multicast session tunnel, and an indication for establishing a multicast session forwarding tunnel. The information about the second PDU session tunnel includes a second PDU session tunnel endpoint identifier of the target access network device, and the information about the second multicast session tunnel includes a second multicast session tunnel endpoint identifier of the target access network device.

Step S1202. The SMF sends an N4 session update request to a UPF. Correspondingly, the UPF receives the N4 session update request sent by the SMF.

For example, the N4 session update request includes tunnel information of the target access network device and tunnel information allocated by the SMF to the UPF, that is, the second PDU session tunnel endpoint identifier of the target access network device, a second PDU session tunnel endpoint identifier of the UPF, the second multicast session tunnel endpoint identifier of the target access network device, and a second multicast session tunnel endpoint identifier of the UPF.

The UPF establishes the second PDU session tunnel with the target access network device based on the second PDU session tunnel endpoint identifier of the target access network device and the second PDU session tunnel endpoint identifier of the UPF. The UPF establishes the second multicast session tunnel with the target access network device based on the second multicast session tunnel endpoint identifier of the target access network device and the second multicast session tunnel endpoint identifier of the UPF.

Step S1203. The UPF sends an N4 session update response to the SMF. Correspondingly, the SMF receives the N4 session update response sent by the UPF.

The N4 session update response is used to indicate that establishment of the second multicast session tunnel and establishment of the second PDU session tunnel are completed.

Step S1204 to step S1207 are the same as step S804 to step S807 in FIG. 8. Details are not described herein again.

Step S1208. The SMF generates and sends a second end marker. For example, a path for sending the second end marker by the SMF may be SMF→UPF→Source access network device.

The following describes a manner of constructing the second end marker by the UPF. Refer to the procedure in FIG. 12. A difference lies in that in step S1208, after receiving the third message, the SMF sends a fifth message to the UPF, to indicate the UPF to generate and send the second end marker. For example, the third message includes information about a first PDU session tunnel. For example, a path for sending the second end marker by the UPF may be that the UPF sends the second end marker to the source access network device through the first PDU session tunnel.

In the following embodiment, a process in which a core network device constructs an end marker after UE 1 is handed over to a target access network device is described in detail by using an example in which the target access network device does not support a multicast function in the solution 2.

The following describes a manner of constructing the second end marker by a second core network device.

When a fourth construction condition is met, the second core network device constructs the second end marker. For example, the fourth construction condition may include that the UPF has a transmission tunnel (a tunnel between the MUF and the UPF) corresponding to the first multicast service, and there is a complete transmission path (the second PDU session tunnel) of the PDU session of the UE 1 between the target access network device and the core network device, and multicast service data of the UE 1 has been added to the PDU session of the UE 1 for transmission.

The second core network device herein may be an SMF or a UPF.

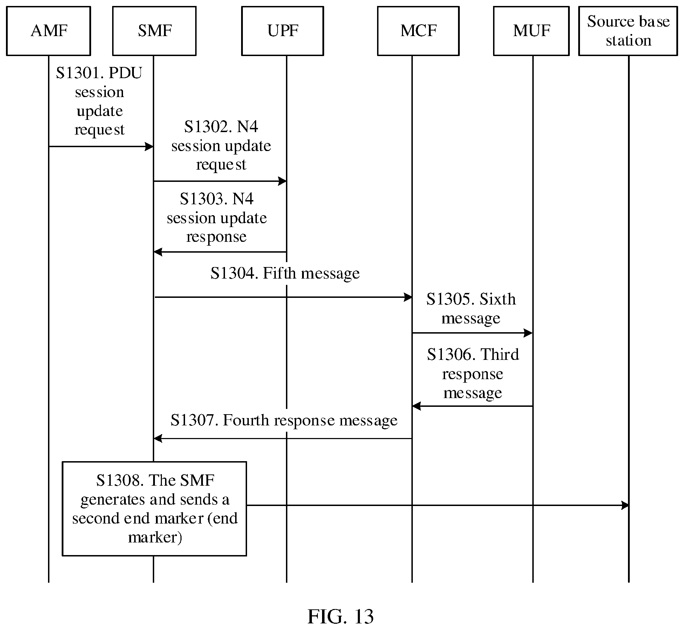

A manner of constructing a second end marker by an SMF is described. FIG. 13 is a schematic flowchart corresponding to a manner of constructing a second end marker according to an embodiment of this application. As shown in FIG. 13, the method includes the following steps.

Step S1301. An SMF receives a PDU session update request sent by an AMF.

For example, the PDU session update request includes but is not limited to multicast capability information of the target access network device and information about a second PDU session tunnel, and the information about the second PDU session tunnel includes a second PDU session tunnel endpoint identifier of the target access network device.

Step S1302. The SMF sends an N4 session update request to a UPF. Correspondingly, the UPF receives the N4 session update request sent by the SMF.

For example, the N4 session update request includes but is not limited to tunnel information of the target access network device, tunnel information allocated by the SMF to the UPF, and a first mapping relationship. The tunnel information of the target access network device and the tunnel information allocated by the SMF to the UPF include the second PDU session tunnel endpoint identifier of the target access network device and a second PDU session tunnel endpoint identifier allocated by the SMF to the UPF. The first mapping relationship is used by the UPF to: after receiving multicast service data of a first multicast service sent by an MUF, determine, based on the first mapping relationship, a QFI of a multicast QoS flow corresponding to the service data of the first multicast service, determine, based on the first mapping relationship, a QFI of a unicast QoS flow corresponding to the QFI of the multicast QoS flow, replace the QFI of the multicast QoS flow with the determined QFI of the unicast QoS flow, and add the obtained unicast QoS flow to the PDU session tunnel of the UE 1.

Step S1303. The SMF sends an N4 session update response to a UPF. Correspondingly, the UPF receives the N4 session update response sent by the SMF.

Step S1304. If a tunnel for transmitting the multicast service data between the MUF and the UPF has not been established in this case, the SMF sends a fifth message to an MCF, where the fifth message is used to indicate the MCF to notify the MUF to establish the tunnel with the UPF. Correspondingly, the MCF receives the fifth message from the SMF. The fifth message includes but is not limited to a tunnel endpoint identifier allocated by the SMF to the UPF.

Step S1305. The MCF sends a sixth message to the MUF, where the sixth message may be used to indicate the MUF to establish the tunnel between the MUF and the UPF. The sixth message includes but is not limited to a tunnel endpoint identifier allocated by the MCF to the MUF and a tunnel endpoint identifier of the UPF.

Step S1306. After establishment of the tunnel between the MUF and the UPF is completed, the MUF sends a third response message to the MCF. Correspondingly, the MCF receives the third response message. For example, the third response message is used to indicate that there is a tunnel connection between the MUF and the UPF.

Step S1307. The MCF sends a fourth indication response to the SMF. Correspondingly, the SMF receives the fourth indication response. The fourth response message is used to indicate, to the SMF, that there is a tunnel connection between the MUF and the UPF.

It should be noted that step S1306 is merely an example. The tunnel information of the target access network device and the tunnel information allocated by the SMF to the UPF may alternatively be carried in another message or dedicated signaling. This is not limited in this embodiment of this application. New information is carried in existing signaling herein to reduce signaling overheads.

Step S1308. After receiving the fourth indication response sent by the MCF, the SMF generates and sends a second end marker. For example, a path for sending the second end marker may be SMF→UPF→Source access network device.

The foregoing is a complete procedure in which the SMF constructs and sends the second end marker.

For another example, if the SMF determines that there is a connection between the UPF and the MUF, FIG. 13 is used as an example. In step S1302, after receiving the N4 session update response sent by the UPF, the SMF may construct the second end marker.

In the following embodiment, a manner in which the target access network device forwards the data of the first multicast service to the UE 1 is described in detail.

The following describes a manner of sending a PDU session of the UE 1 in an air-interface point-to-point manner. The following two examples are used for description.

Example 1: The target access network device supports a multicast function.

The source access network device receives the data of the first multicast service from the multicast session tunnel. The source access network device replicates the data of the first multicast service to obtain the second data, where the second data includes the first QFI, and the first QFI is the QFI of the multicast QoS flow. The source access network device forwards the second data to the target access network device through the multicast session forwarding tunnel. After receiving the second data forwarded through the forwarding tunnel, the target access network device sends the second data to the UE 1 through the air interface of the PDU session of the UE 1. Specifically, the target access network device determines, based on the first mapping relationship, the second QFI (that is, the unicast QFI) corresponding to the first QFI included in the second data, determines, based on the second mapping relationship, the DRB configuration (that is, a DRB ID corresponding to the unicast QFI) corresponding to the second QFI, decapsulates the second data, removes the GPT-U header, maps the data part of the second data to the corresponding DRB, and then send the data part to the UE 1. The second mapping relationship is a mapping relationship between the QFI of the unicast QoS flow and a DRB.

Example 2: The target access network device does not support a multicast function.

After the source access network device receives the data of the first multicast service from the multicast session tunnel, the source access network device replicates the data of the first multicast service to obtain the second data, where the second data includes the first QFI, and the first QFI is the QFI of the multicast QoS flow. The source access network device determines, based on the first mapping relationship, the second QFI corresponding to the first QFI, and replaces the first QFI with the second QFI. Then, the source access network device forwards third data (that is, the second data obtained after the first QFI is replaced with of the second QFI, to be specific, a data part of the third data is the same as that of the second data) to the target access network device through the PDU session forwarding tunnel. The target access network device receives, from the source access network device through the PDU session tunnel, the unicast QoS flow corresponding to the data of the first multicast service. The target access network device determines, based on the second mapping relationship, the DRB configuration corresponding to the second QFI, decapsulates the third data, removes the GPT-U header, maps the data part to the corresponding DRB, and then sends the data part to the UE 1.

In conclusion, after receiving the data that is of the first multicast service and that is forwarded through the forwarding tunnel, the target access network device sends the data to the UE 1 in a plurality of manners. For example, as described above, the data is sent through the air interface of the PDU session of the UE 1. It should be noted that the PDU session may be a PDU session of the UE 1 and associated with the first multicast service, or may be another PDU session of the UE 1. This is not limited in embodiments of this application. For another example, when the target access network device supports a multicast function, the target access network device may further perform sending through an air interface (that is, a point-to-multipoint manner) of a multicast session.

The foregoing mainly describes the solutions provided in this application from a perspective of interaction between network elements. It may be understood that, to implement the foregoing functions, each network element includes a corresponding hardware structure and/or software module for implementing each function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

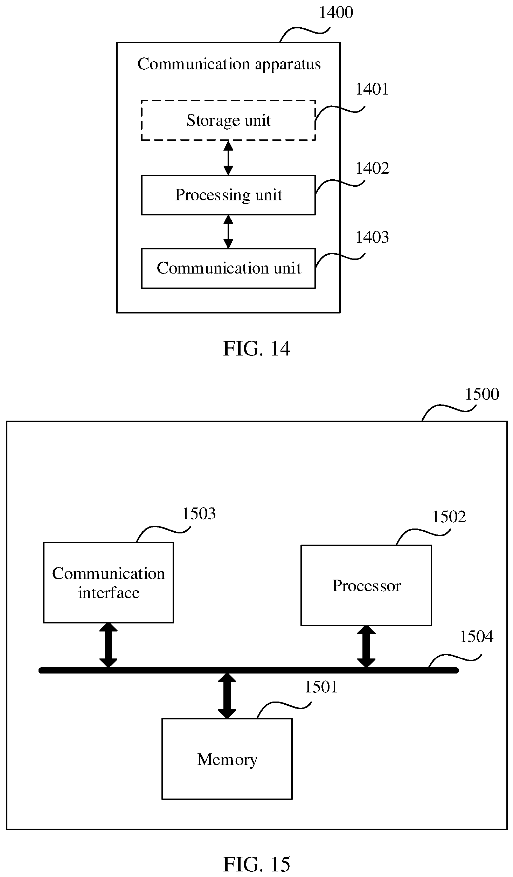

FIG. 14 is a possible example block diagram of a data transmission apparatus according to this application. The apparatus 1400 may exist in a form of software or hardware. The apparatus 1400 may include a processing unit 1402 and a communication unit 1403. In an implementation, the communication unit 1403 may include a receiving unit and a sending unit. The processing unit 1402 is configured to control and manage an action of the apparatus 1400. The communication unit 1403 is configured to support the apparatus 1400 in communicating with another network entity. The apparatus 1400 may further include a storage unit 1401, configured to store program code and data of the apparatus 1400.

The processing unit 1402 may be a processor or a controller, for example, may be a general-purpose central processing unit (central processing unit, CPU), a general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The storage unit 1401 may be a memory. The communication unit 1403 is an interface circuit of the apparatus, and is configured to receive a signal from another apparatus. For example, when the apparatus is implemented by using a chip, the communication unit 1403 is an interface circuit that is of the chip and that is configured to receive a signal from another chip or apparatus, or is an interface circuit that is of the chip and that is configured to send a signal to another chip or apparatus.

The apparatus 1400 may be the access network device (such as the source access network device or the target access network device) in any one of the foregoing embodiments, or may be a chip used in the access network device. For example, when the apparatus 1400 is the source access network device, the processing unit 1402 may be, for example, a processor, and the communication unit 1403 may be, for example, a transceiver. Optionally, the transceiver may include a radio frequency circuit, and the storage unit may be, for example, a memory. For example, when the apparatus 1400 is the chip that is used in the access network device, the processing unit 1402 may be, for example, a processor, and the communication unit 1403 may be, for example, an input/output interface, a pin, or a circuit. The processing unit 1402 may execute computer executable instructions stored in the storage unit. Optionally, the storage unit is a storage unit inside the chip, such as a register or a cache. Alternatively, the storage unit may be a storage unit that is in the source access network device and that is located outside the chip, such as a read-only memory (read-only memory, ROM) or another type of static storage device that can store static information and instructions, or a random access memory (random access memory, RAM).

The apparatus 1400 may be the core network device (for example, the first core network device or the third core network device) in any one of the foregoing embodiments, or may be a chip used in the core network device. For example, when the apparatus 1400 is the core network device, the processing unit 1402 may be, for example, a processor, and the communication unit 1403 may be, for example, a transceiver. Optionally, the transceiver may include a radio frequency circuit, and the storage unit may be, for example, a memory. For example, when the apparatus 1400 is the chip that is used in the access network device, the processing unit 1402 may be, for example, a processor, and the communication unit 1403 may be, for example, an input/output interface, a pin, or a circuit. The processing unit 1402 may execute computer executable instructions stored in the storage unit. Optionally, the storage unit is a storage unit inside the chip, such as a register or a cache. Alternatively, the storage unit may be a storage unit that is in the source access network device and that is located outside the chip, such as a read-only memory (read-only memory, ROM) or another type of static storage device that can store static information and instructions, or a random access memory (random access memory, RAM).

In a first embodiment, the apparatus 1400 is the source access network device in the foregoing examples, and the communication unit 1403 of the source access network device includes a sending unit and a receiving unit. The receiving unit is specifically configured to receive a second end marker from a first core network device through a second tunnel, where the second tunnel is a transmission tunnel of a protocol data unit PDU session of a first terminal device, and the PDU session is associated with a first multicast/broadcast service. The processing unit 1402 is further configured to: in response to receiving the second end marker, determine, based on the PDU session and the second end marker, to stop sending data of the first multicast/broadcast service to a target access network device through a forwarding tunnel of the first terminal device.

In a possible implementation method, the forwarding tunnel includes a first forwarding tunnel or a second forwarding tunnel, where the first forwarding tunnel is a forwarding tunnel that corresponds to the first multicast/broadcast service and that is of the first terminal device, and the second forwarding tunnel is a forwarding tunnel corresponding to the PDU session of the first terminal device.

In a possible implementation method, the receiving unit is specifically configured to receive the data of the first multicast/broadcast service from the first core network device through a first tunnel, where the first tunnel is a tunnel used to transmit the data of the first multicast/broadcast service to the source access network device. The processing unit 1402 is specifically configured to replicate first data and send the first data to the target access network device through the first forwarding tunnel or the second forwarding tunnel, where the first data is a part or all of the data that is of the first multicast/broadcast service and that is received by the source access network device through the first tunnel. Controlling the sending unit to stop forwarding the data of the first multicast/broadcast service to the target access network device through the forwarding tunnel of the first terminal device includes: Controlling the sending unit to stop forwarding the first data to the target access network device through the forwarding tunnel.

In a possible implementation method, the receiving unit is specifically configured to receive, from the first core network device through the first tunnel, a first quality of service flow identifier QFI corresponding to the first data. The processing unit 1402 is specifically configured to: determine, based on a first mapping relationship, a second QFI corresponding to the first QFI, where the first mapping relationship includes a correspondence between a QFI used when the data of the first multicast/broadcast service is transmitted through the first tunnel and a QFI used when the data of the first multicast/broadcast service is transmitted through a tunnel of the PDU session; and replicate the first data. The sending unit is specifically configured to send the replicated first data and the second QFI to the target access network device through the second forwarding tunnel.

In a possible implementation method, the receiving unit is further configured to receive the first mapping relationship from a session management function network element SMF.

In a possible implementation method, the processing unit 1402 replicates the second end marker, and sends the replicated second end marker to the target access network device through the first forwarding tunnel.

In a second embodiment, the apparatus 1400 is the target access network device in the foregoing examples, and the communication unit 1403 of the target access network device includes a sending unit and a receiving unit. The receiving unit is configured to receive first data of a first multicast/broadcast service through a forwarding tunnel of a first terminal device. The sending unit is configured to send the first data of the first multicast/broadcast service to the first terminal device in an air interface point-to-point manner. The receiving unit is further configured to receive an end marker through the forwarding tunnel. The processing unit 1402 is configured to control the sending unit to stop receiving data of the first multicast/broadcast service through the forwarding tunnel.

In a possible implementation method, the forwarding tunnel includes a first forwarding tunnel or a second forwarding tunnel, where the first forwarding tunnel is a forwarding tunnel that corresponds to the first multicast/broadcast service and that is of the first terminal device, the second forwarding tunnel is a forwarding tunnel corresponding to a protocol data unit PDU session of the first terminal device, and the PDU session of the first terminal device is associated with the first multicast/broadcast service.

In a possible implementation method, the sending unit is specifically configured to send the first data to the first terminal device by using a PDU session, where the PDU session is the PDU session of the first terminal device.

In a possible implementation method, the receiving unit is specifically configured to receive the first data of the first multicast/broadcast service through the first forwarding tunnel; or is further configured to receive the first data and a first quality of service flow identifier QFI corresponding to the first data through the first forwarding tunnel. The processing unit 1402 is specifically configured to determine, based on a first mapping relationship, a second QFI corresponding to the first QFI, where the first mapping relationship includes a correspondence between a QFI used when the data of the first multicast/broadcast service is transmitted through the first tunnel and a QFI used when the data of the first multicast/broadcast service is transmitted through a tunnel of the PDU session. The sending unit is specifically configured to send the first data to the first terminal device.

In a possible implementation method, the receiving unit is further configured to: receive second data of the first multicast/broadcast service through a third tunnel, and buffer the second data, where the third tunnel is a tunnel of the PDU session of the first terminal device, or the third tunnel is a tunnel of the first multicast/broadcast service.

The sending unit is further configured to send the buffered second data to the first terminal device.

In a possible implementation method, the third tunnel is a tunnel of the first multicast/broadcast service.

The receiving unit is specifically configured to receive the second data and a third QFI corresponding to the second data through the tunnel of the first multicast/broadcast service.

The processing unit 1402 is specifically configured to: determine, based on a first mapping relationship, a fourth QFI corresponding to the third QFI, where the first mapping relationship includes a correspondence between a QFI used when the data of the first multicast/broadcast service is sent through the tunnel of the first multicast/broadcast service and a QFI used when the data of the first multicast/broadcast service is transmitted through a tunnel of the PDU session; and send the second data to the first terminal device based on the fourth QFI.

In a third embodiment, the apparatus 1400 is the first core network device in the foregoing examples. The processing unit 1402 of the first core network device is specifically configured to generate a first end data marker end marker, where the first end marker includes first information, and the first information is used to determine a first terminal device. The communication unit 1403 includes a sending unit and a receiving unit. The sending unit is specifically configured to send the first end marker to a source access network device through a first tunnel, where the first tunnel is used to transmit data of a first multicast/broadcast service.

In a possible implementation method, the receiving unit is further configured to receive a second message from a third core network device, where the second message is used to indicate the processing unit 1402 to generate and send the first end marker.

In a possible implementation method, the second message includes the first information.

In a possible implementation method, the second message is further used to indicate the processing unit 1402 to send the first end marker through the first tunnel.

The processing unit 1402 is further configured to determine the first tunnel based on the second message.

In a possible implementation method, the second message includes information about the first tunnel and/or information about the first multicast/broadcast service.

In a possible implementation method, the first core network device is a session management function network element SMF, and the first core network device is the third core network device; the first core network device is a multicast/broadcast user plane network element, and the third core network device is a multicast/broadcast control plane network element; or the first core network device is a user plane network element UPF or a multicast/broadcast control plane network element, and the third core network device is an SMF.

In a possible implementation method, the first core network device is a UPF or a multicast user plane function, and the multicast user plane function is a multicast/broadcast user plane network element.

The sending unit is further configured to: send first data of the first multicast/broadcast service to the source access network device through the first tunnel, where the first tunnel is a tunnel for transmitting data of the first multicast/broadcast service; and send second data of the first multicast/broadcast service to a target access network device through a third tunnel, where the third tunnel is a tunnel of a PDU session of the first terminal device, or the third tunnel is a tunnel of the first multicast/broadcast service.

In a possible implementation method, the third tunnel is the tunnel of the PDU session of the first terminal device.

The processing unit 1402 is specifically configured to: determine a third QFI that corresponds to the second data when the second data is to be sent through the tunnel of the PDU session; and determine, based on a first mapping relationship, a fourth QFI corresponding to the third QFI, where the first mapping relationship includes a correspondence between a QFI used when the data of the first multicast/broadcast service is sent through the tunnel of the first multicast/broadcast service and a QFI used when the data of the first multicast/broadcast service is sent through the tunnel of the PDU session.

The sending unit is specifically configured to send the second data and the fourth QFI to the target access network device through the third tunnel.

In a possible implementation method, the first core network device is a UPF, and the third core network device is an SMF.

The receiving unit is further configured to receive a third message from the third core network device, where the third message is used to indicate the processing unit 1402 to generate and send a second end marker.

The processing unit 1402 is further configured to: generate the second end marker, and send the second end marker to the source access network device through a second tunnel, where the second tunnel is a tunnel of a PDU session of the first terminal device, and the PDU session is associated with the first multicast/broadcast service.

In a fourth embodiment, the apparatus 1400 is the third core network device in the foregoing examples. The processing unit 1402 of the third core network device is specifically configured to generate a second message, where the second message includes first information. The communication unit 1403 includes a sending unit and a receiving unit. The sending unit is specifically configured to send the second message to a first core network device, where the second message is used to indicate the processing unit 1402 to generate and send a first end marker, the first end marker includes the first information, and the first information is used to determine a first terminal device.

In a possible implementation method, the second message is further used to indicate the processing unit 1402 to send the first end marker to a source access network device through a first tunnel, and the first tunnel is used to transmit data of a first multicast/broadcast service.

In a possible implementation method, the second message includes information about the first tunnel, or the second message includes information about the first multicast/broadcast service.

In a possible implementation method, the first core network device is a session management function network element SMF, and the first core network device and the third core network device are a same device; the first core network device is a multicast/broadcast user plane network element, and the third core network device is a multicast/broadcast service control plane network element; or the first core network device is a user plane network element UPF or a multicast/broadcast service control plane network element, and the third core network device is an SMF.

In a possible implementation method, the first core network device is a UPF, and the third core network device is an SMF.

The sending unit is further configured to send a third message to the first core network device, where the third message is used to indicate the processing unit 1402 to generate a second end marker and send the second end marker to the source access network device through a second tunnel, the second tunnel is a tunnel of a PDU session of the first terminal device, and the PDU session is associated with the first multicast/broadcast service.

In a fifth embodiment, the apparatus 1400 is the source access network device in the foregoing examples, and the communication unit 1403 of the source access network device includes a sending unit and a receiving unit. The receiving unit is specifically configured to receive a second end marker from a first core network device through a second tunnel, where the second tunnel is a transmission tunnel of a protocol data unit PDU session of a first terminal device, and the PDU session is associated with a first multicast/broadcast service. The processing unit 1402 is specifically configured to: in response to receiving the second end marker, determine, based on the PDU session and the second end marker, to stop sending data of the first multicast/broadcast service to a target access network device through a forwarding tunnel of the first terminal device.

In a possible implementation method, the forwarding tunnel includes a first forwarding tunnel or a second forwarding tunnel, where the first forwarding tunnel is a forwarding tunnel that corresponds to the first multicast/broadcast service and that is of the first terminal device, and the second forwarding tunnel is a forwarding tunnel corresponding to the PDU session of the first terminal device.

In a possible implementation method, the receiving unit is further configured to receive the data of the first multicast/broadcast service from the first core network device through a first tunnel, where the first tunnel is a tunnel used to transmit the data of the first multicast/broadcast service to the source access network device. The processing unit 1402 is further configured to: replicate first data and control the sending unit to send the replicated first data to the target access network device through the first forwarding tunnel or the second forwarding tunnel, where the first data is a part or all of the data that is of the first multicast/broadcast service and that is received by the source access network device through the first tunnel; and control the sending unit to stop forwarding the first data to the target access network device through the forwarding tunnel.

In a possible implementation method, the receiving unit is further configured to receive, from the first core network device through the first tunnel, a first quality of service flow identifier QFI corresponding to the first data.

The processing unit 1402 is further configured to: determine, based on a first mapping relationship, a second QFI corresponding to the first QFI, where the first mapping relationship includes a correspondence between a QFI used when the data of the first multicast/broadcast service is transmitted through the first tunnel and a QFI used when the data of the first multicast/broadcast service is transmitted through a tunnel of the PDU session; and replicate the first data.

The sending unit is further configured to send the replicated first data and the second QFI to the target access network device through the second forwarding tunnel.

In a possible implementation method, the receiving unit is further configured to receive the first mapping relationship from a session management function network element SMF.

In a possible implementation method, the processing unit 1402 is further configured to: replicate the second end marker, and control the sending unit to send the replicated second end marker to the target access network device through the first forwarding tunnel.

In a sixth embodiment, the apparatus 1400 is the target access network device in the foregoing examples, and the communication unit 1403 of the target access network device includes a sending unit and a receiving unit. The receiving unit is specifically configured to receive first data of a first multicast/broadcast service through a forwarding tunnel of a first terminal device. The sending unit is specifically configured to: send the first data of the first multicast/broadcast service to the first terminal device in an air interface point-to-point manner, and receive an end marker through the forwarding tunnel. The processing unit 1402 is specifically configured to control the sending unit to stop receiving the data of the first multicast/broadcast service through the forwarding tunnel.

In a possible implementation, the forwarding tunnel includes:
a first forwarding tunnel or a second forwarding tunnel, where the first forwarding tunnel is a forwarding tunnel that corresponds to the first multicast/broadcast service and that is of the first terminal device, the second forwarding tunnel is a forwarding tunnel corresponding to a protocol data unit PDU session of the first terminal device, and the PDU session of the first terminal device is associated with the first multicast/broadcast service.

In a possible implementation method, the sending unit is specifically configured to send the first data to the first terminal device by using a PDU session, where the PDU session is the PDU session of the first terminal device.

In a possible implementation method, the sending unit is specifically configured to receive the first data of the first multicast/broadcast service through the first forwarding tunnel. The receiving unit is specifically configured to receive, through the first forwarding tunnel, the first data and a first quality of service flow identifier QFI corresponding to the first data. The processing unit 1402 is specifically configured to determine, based on a first mapping relationship, a second QFI corresponding to the first QFI, where the first mapping relationship includes a correspondence between a QFI used when the data of the first multicast/broadcast service is transmitted through the first tunnel and a QFI used when the data of the first multicast/broadcast service is transmitted through a tunnel of the PDU session. The sending unit is further configured to send the first data to the first terminal device.

In a possible implementation method, the receiving unit is further configured to: receive second data of the first multicast/broadcast service through a third tunnel, and buffer the second data, where the third tunnel is a tunnel of the PDU session of the first terminal device, or the third tunnel is a tunnel of the first multicast/broadcast service. The sending unit is further configured to send the buffered second data to the first terminal device.

In a possible implementation method, the third tunnel is the tunnel of the first multicast/broadcast service. The receiving unit is specifically configured to receive the second data and a third QFI corresponding to the second data through the tunnel of the first multicast/broadcast service. The processing unit 1402 is specifically configured to: determine, based on a first mapping relationship, a fourth QFI corresponding to the third QFI, where the first mapping relationship includes a correspondence between a QFI used when the data of the first multicast/broadcast service is sent through the tunnel of the first multicast/broadcast service and a QFI used when the data of the first multicast/broadcast service is transmitted through a tunnel of the PDU session; and send the second data to the first terminal device based on the fourth QFI.

In a seventh embodiment, the apparatus 1400 is the target access network device in the foregoing examples. The processing unit 1402 of the target access network device is specifically configured to generate the second end marker. The communication unit 1403 includes a sending unit and a receiving unit. The sending unit is specifically configured to send the second end marker to a source access network device through a second tunnel, where the second tunnel is a tunnel of a protocol data unit PDU session of a first terminal device, and the PDU session is associated with a first multicast/broadcast service.

In a possible implementation method, the receiving unit is further configured to receive third information from a third core network device, where the third information is used to indicate the first core network device to generate and send the second end marker.

In a possible implementation method, the first core network device is a session management function network element SMF, and the first core network device and the third core network device are a same device; or the first core network device is a user plane network element UPF, and the third core network device is an SMF.

In a possible implementation method, the first core network device is a UPF or a multicast user plane function, and the multicast user plane function is a multicast/broadcast user plane network element. The sending unit is further configured to send first data of the first multicast/broadcast service to the source access network device through a first tunnel, where the first tunnel is a tunnel used to transmit the data of the first multicast/broadcast service to the source access network device; and is further configured to send third data of the first multicast/broadcast service to a target access network device through a third tunnel, where the third tunnel is the tunnel of the PDU session of the first terminal device, or the third tunnel is a tunnel used by the target access network device to receive the first multicast/broadcast service.

In a possible implementation method, the processing unit 1402 is further configured to: determine a third QFI corresponding to the second data when the second data is sent through the tunnel of the first multicast/broadcast service; determine, based on a first mapping relationship, a fourth QFI corresponding to the third QFI, where the first mapping relationship includes a correspondence between a QFI used when the data of the first multicast/broadcast service is sent through the tunnel of the first multicast/broadcast service and a QFI used when the data of the first multicast/broadcast service is transmitted through a tunnel of the PDU session. The sending unit is further configured to send the second data and the fourth QFI to the target access network device through the third tunnel.

FIG. 15 is a schematic diagram of an apparatus according to this application. The apparatus may be the access network device (for example, the source access network device or the target access network device in the foregoing examples) or the core network device (for example, the first core network device or the third core network device in the foregoing examples) in the foregoing embodiments. The apparatus 1500 includes a processor 1502, a communication interface 1503, and a memory 1501. Optionally, the apparatus 1500 may further include a communication line 1504. The communication interface 1503, the processor 1502, and the memory 1501 may be connected to each other by using the communication line 1504. The communication line 1504 may be a peripheral component interconnect (peripheral component interconnect, PCI for short) bus, an extended industry standard architecture (extended industry standard architecture, EISA for short) bus, or the like. The communication line 1504 may be classified into an address bus, a data bus, a control bus, and the like. For ease of representation, only one thick line is used to represent the bus in FIG. 15, but this does not mean that there is only one bus or only one type of bus.

The processor 1502 may be a CPU, a microprocessor, an ASIC, or one or more integrated circuits configured to control program execution in the solutions of this application.

The communication interface 1503 may be any apparatus such as a transceiver, and is configured to communicate with another device or a communication network, such as ethernet, a radio access network (radio access network, RAN), a wireless local area network (wireless local area network, WLAN), or a wired access network.

The memory 1501 may be a ROM, another type of static storage device that can store static information and instructions, a RAM, or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of instructions or a data structure and that can be accessed by a computer. However, the memory 1501 is not limited thereto. The memory may exist independently, and is connected to the processor by using the communication line 1504. The memory may alternatively be integrated with the processor.

The memory 1501 is configured to store computer-executable instructions for executing the solutions of this application, and the processor 1502 controls the execution. The processor 1502 is configured to execute the computer-executable instructions stored in the memory 1501, to implement the session handling method provided in the foregoing embodiments of this application.

Optionally, the computer-executable instructions in this embodiment of this application may also be referred to as application program code. This is not specifically limited in this embodiment of this application.

The program product may be any combination of one or more readable media. The readable medium may be a readable signal medium or a readable storage medium. For example, the readable storage medium may be, but is not limited to, an electrical, magnetic, optical, electromagnetic, infrared, or semiconductor system, apparatus or device, or any combination thereof. More specific examples (non-exhaustive list) of the readable storage medium include: an electrical connection having one or more conducting wires, a portable disk, a hard disk, a random access memory (RAM), a read-only memory (ROM), an erasable programmable read-only memory (EPROM or flash memory), an optical fiber, a portable compact disc read-only memory (CD-ROM), an optical storage component, a magnetic storage component, or any appropriate combination thereof.

A program product for configuring parameters in an implementation of this application may use a portable compact disc read-only memory (CD-ROM) and include program code, and may run on a server device. However, the program product in this application is not limited thereto. In this specification, the readable storage medium may be any tangible medium that includes or stores a program, and the program can be transmitted as information and used by an apparatus or a component or used in combination with an apparatus or a component.

The readable signal medium may include a data signal propagated in a baseband or as a part of a carrier, where the data signal carries readable program code. The propagated data signal may be in a plurality of forms, including but not limited to an electromagnetic signal, an optical signal, or any appropriate combination thereof. The readable signal medium may alternatively be any readable medium other than the readable storage medium. The readable medium may send, propagate, or transmit a program used by or in combination with a periodic network action system, apparatus, or device.

The program code included in the readable medium may be transmitted by using any appropriate medium, including but not limited to a wireless medium, a wired medium, an optical cable, an RF medium, or any appropriate combination thereof.

The program code used to execute the operations of this application may be written in any combination of one or more program design languages. The program design languages include object-oriented program design languages such as Java and C++, and further include a conventional procedural program design language such as a "C" language or a similar program design language. The program code may be completely executed on a user's computing device, partially executed on user equipment, executed as an independent software package, partially executed on a user's computing device and partially executed on a remote computing device, or completely executed on a remote computing device or server. When the program code is executed on the remote computing device, the remote computing device may be connected to the user's computing device by using any type of network, including a local area network (LAN) or a wide area network (WAN), or may be connected to an external computing device.

An embodiment of this application further provides a computing device readable storage medium for an information synchronization method, that is, content is not lost after a power failure. The storage medium stores a software program including program code. When the program code is executed on a computing device, any solution for information synchronization in the foregoing embodiments of this application can be implemented when the software program is read and executed by one or more processors.

The foregoing describes this application with reference to the block diagrams and/or flowcharts of the method, the device (system), and/or the computer program product in embodiments of this application. It should be understood that a block of the block diagrams and/or flowcharts and a combination of blocks in the block diagrams and/or flowcharts, can be implemented by using computer program instructions. These computer program instructions may be provided to a processor of a general-purpose computer, a processor of a dedicated computer, or another programmable data processing apparatus to produce a machine, so that the instructions executed by the processor of the computer or the another programmable data processing apparatus create a method for implementing a specific function/action in the block in the flowcharts and/or block diagrams.

Correspondingly, this application may further be implemented by using hardware and/or software (including firmware, resident software, microcode, and the like). Still further, this application may be in a form of a computer program product on a computer-usable or computer-readable storage medium. The computer program product has computer-usable or computer-readable program code implemented in the medium, so that the computer-usable or computer-readable is used by an instruction execution system or used in combination with an instruction execution system. In the context of this application, the computer-usable or computer-readable medium may be any medium, and may include, store, communicate, transmit, or transfer a program, for use by an instruction execution system, apparatus, or device or used in combination with an instruction execution system, apparatus, or device.

## Claims

1. A data transmission method performed by a source access network device, comprising:
receiving, by the source access network device, data of a first multicast/broadcast service from a first core network device through a first tunnel, wherein the first tunnel is a transmission tunnel of the first multicast/broadcast service and comprises a first forwarding tunnel which is a forwarding tunnel that corresponds to the first multicast/broadcast service and that is of a first terminal device, or a second forwarding tunnel which is a forwarding tunnel corresponding to a protocol data unit of a PDU session of the first terminal device;
replicating, by the source access network device, first data, and forwarding the first data to a target access network device through the first forwarding tunnel or the second forwarding tunnel, wherein the first data is a part or all of the data that is of the first multicast/broadcast service and that is received by the source access network device through the first tunnel, comprising:
receiving, by the source access network device from the first core network device through the first tunnel, a first quality of service flow identifier QFI corresponding to the first data;
determining, by the source access network device based on a first mapping relationship, a second QFI corresponding to the first QFI, wherein the first mapping relationship comprises a correspondence between a QFI used when the data of the first multicast/broadcast service is transmitted through the first tunnel and a QFI used when the data of the first multicast/broadcast service is transmitted through a tunnel of the PDU session;
replicating, by the source access network device, the first data; and
sending, by the source access network device, the replicated first data and the second QFI to the target access network device through the second forwarding tunnel;
receiving (S501), by a source access network device, a first end marker from the first core network device through the first tunnel, wherein the end marker comprises first information used to determine the first terminal device;
determining (S502), by the source access network device based on the first information, that the first end marker acts on the first terminal device; and
in response to receiving the first end marker, stopping (S503), by the source access network device, forwarding data of the first multicast/broadcast service to a target access network device through a forwarding tunnel of the first terminal device comprising stopping, by the source access network device, forwarding the first data to the target access network device through the forwarding tunnel.

2. The method according to claim 1, further comprising:
receiving, by the source access network device, the first mapping relationship from a session management function network element SMF.

3. A network device, wherein the network device comprises a processor (1502) and a memory (1501); the processor (1502) is configured to execute instructions stored in the memory (1501); and when the instructions are run, the network device (1400, 1500) is enabled to perform the method according to any one of claim 1 or 2

## Patentansprüche

1. Datenübertragungsverfahren, das durch eine Quell-Zugangsnetzwerkvorrichtung durchgeführt wird, umfassend:
Empfangen von Daten eines ersten Multicast-/Broadcast-Dienstes durch die Quell-Zugangsnetzwerkvorrichtung von einer ersten Kernnetzwerkvorrichtung über einen ersten Tunnel, wobei der erste Tunnel ein Übertragungstunnel des ersten Multicast-/Broadcast-Dienstes ist und einen ersten Weiterleitungstunnel, der ein Weiterleitungstunnel ist, der dem ersten Multicast-/Broadcast-Dienst entspricht und zu einer ersten Endgerätevorrichtung gehört, oder einen zweiten Weiterleitungstunnel, der ein Weiterleitungstunnel ist, der einer Protokolldateneinheit einer PDU-Sitzung der ersten Endgerätevorrichtung entspricht, umfasst;
Replizieren erster Daten durch die Quell-Zugangsnetzwerkvorrichtung und Weiterleiten der ersten Daten an eine Ziel-Zugangsnetzwerkvorrichtung über den ersten Weiterleitungstunnel oder den zweiten Weiterleitungstunnel,
wobei die ersten Daten ein Teil oder die Gesamtheit der Daten sind, die zu dem ersten Multicast-/Broadcast-Dienst gehören und von der Quell-Zugangsnetzwerkvorrichtung über den ersten Tunnel empfangen werden, umfassend:
Empfangen einer ersten Dienstgüte-Flusskennung QFI, die den ersten Daten entspricht, durch die Quell-Zugangsnetzwerkvorrichtung von der ersten Kernnetzwerkvorrichtung über den ersten Tunnel;
Bestimmen einer zweiten QFI, die der ersten QFI entspricht, durch die Quell-Zugangsnetzwerkvorrichtung basierend auf einer ersten Abbildungsbeziehung, wobei die erste Abbildungsbeziehung eine Entsprechung zwischen einer QFI, die verwendet wird, wenn die Daten des ersten Multicast-/Broadcast-Dienstes über den ersten Tunnel übertragen werden, und einer QFI, die verwendet wird, wenn die Daten des ersten Multicast-/Broadcast-Dienstes über einen Tunnel der PDU-Sitzung übertragen werden, umfasst;
Replizieren der ersten Daten durch die Quell-Zugangsnetzwerkvorrichtung; und
Senden der replizierten ersten Daten und der zweiten QFI durch die Quell-Zugangsnetzwerkvorrichtung über den zweiten Weiterleitungstunnel an die Ziel-Zugangsnetzwerkvorrichtung;
Empfangen (S501) eines ersten Endmarkers von der ersten Kernnetzwerkvorrichtung durch eine Quell-Zugangsnetzwerkvorrichtung über den ersten Tunnel, wobei der Endmarker erste Informationen umfasst, die verwendet werden, um die erste Endgerätevorrichtung zu bestimmen;
Bestimmen (S502), durch die Quell-Zugangsnetzwerkvorrichtung basierend auf den ersten Informationen, dass der erste Endmarker auf die erste Endgerätevorrichtung wirkt; und
als Reaktion auf das Empfangen des ersten Endmarkers, Anhalten (S503) des Weiterleitens der Daten des ersten Multicast-/Broadcast-Dienstes durch die Quell-Zugangsnetzwerkvorrichtung an eine Ziel-Zugangsnetzwerkvorrichtung über einen Weiterleitungstunnel der ersten Endgerätevorrichtung, umfassend das Anhalten des Weiterleitens der ersten Daten durch die Quell-Zugangsnetzwerkvorrichtung an die Ziel-Zugangsnetzwerkvorrichtung über den Weiterleitungstunnel,

2. Verfahren nach Anspruch 1, ferner umfassend:
Empfangen der ersten Abbildungsbeziehung von einem Sitzungsverwaltungsfunktionsnetzwerkelement SMF durch die Quell-Zugangsnetzwerkvorrichtung.

3. Netzwerkvorrichtung, wobei die Netzwerkvorrichtung einen Prozessor (1502) und einen Speicher (1501) umfasst; der Prozessor (1502) konfiguriert ist, um in dem Speicher (1501) gespeicherte Befehle auszuführen; und wenn die Befehle ausgeführt werden, die Netzwerkvorrichtung (1400, 1500) in die Lage versetzt wird, das Verfahren nach einem der Ansprüche 1 oder 2 durchzuführen.

## Revendications

1. Procédé de transmission de données réalisé par un dispositif de réseau d'accès source, comprenant :
la réception, par le dispositif de réseau d'accès source, de données d'un premier service de multidiffusion/diffusion provenant d'un premier dispositif de réseau central par le biais d'un premier tunnel, dans lequel le tunnel est un tunnel de transmission du premier service de multidiffusion/diffusion et comprend un premier tunnel de transfert qui est un tunnel de transfert qui correspond au premier service de multidiffusion/diffusion et qui est d'un premier dispositif terminal, ou un second tunnel de transfert qui est un tunnel de transfert correspondant à une unité de données de protocole d'une session de PDU du premier dispositif terminal ;
la réplication, par le dispositif de réseau d'accès source, de premières données, et le transfert des premières données à un dispositif de réseau d'accès cible par le biais du premier tunnel de transfert ou du second tunnel de transfert, dans lequel les premières données sont une partie ou la totalité des données qui sont du premier service de multidiffusion/diffusion et qui sont reçues par le dispositif de réseau d'accès source par le biais du premier tunnel, comprenant :
la réception, par le dispositif de réseau d'accès source du premier dispositif de réseau central par le biais du premier tunnel, d'un premier identifiant de flux de qualité de service QFI correspondant aux premières données ;
la détermination, par le dispositif de réseau d'accès source en fonction d'une première relation de mappage, d'un second QFI correspondant au premier QFI, dans lequel la première relation de mappage comprend une correspondance entre un QFI utilisé lorsque les données du premier service de multidiffusion/diffusion sont transmises par le biais du premier tunnel et un QFI utilisé lorsque les données du premier service de multidiffusion/diffusion sont transmises par le biais d'un tunnel de la session de PDU ;
la réplication, par le dispositif de réseau d'accès source, des premières données ; et
l'envoi, par le dispositif de réseau d'accès source, des premières données répliquées et du second QFI au dispositif de réseau d'accès cible par le biais du second tunnel de transfert ;
la réception (S501), par un dispositif de réseau d'accès source, d'un premier marqueur de fin du premier dispositif de réseau central par le biais du premier tunnel, dans lequel le marqueur de fin comprend des premières informations utilisées pour déterminer le premier dispositif terminal ;
la détermination (S502), par le dispositif de réseau d'accès source en fonction des premières informations, que le premier marqueur de fin agit sur le premier dispositif terminal ; et
en réponse à la réception du premier marqueur de fin, l'arrêt (S503), par le dispositif de réseau d'accès source, du transfert de données du premier service de multidiffusion/diffusion à un dispositif de réseau d'accès cible par le biais d'un tunnel de transfert du premier dispositif terminal comprenant l'arrêt, par le dispositif de réseau d'accès source, du transfert des premières données au dispositif de réseau d'accès cible par le biais du tunnel de transfert.

2. Procédé selon la revendication 1, comprenant également :
la réception, par le dispositif de réseau d'accès source, de la première relation de mappage provenant d'un élément réseau à fonction de gestion de session SMF.

3. Dispositif de réseau, dans lequel le dispositif de réseau comprend un processeur (1502) et une mémoire (1501) ; le processeur (1502) est configuré pour exécuter des instructions stockées dans la mémoire (1501) ; et lorsque les instructions sont exploitées, le dispositif de réseau (1400, 1500) est activé pour réaliser le procédé selon l'une quelconque des revendications 1 ou 2.
